(19) Europäisches Patentamt
European Patent Office
Office européen des brevets

(11) EP 1 508 224 B1

(12) EUROPEAN PATENT SPECIFICATION

(45) Date of publication and mention of the grant of the patent:
**10.10.2007 Bulletin 2007/41**

(21) Application number: **03732421.7**

(22) Date of filing: **20.05.2003**

(51) Int Cl.:
***H04L 12/24*** *(2006.01)*

(86) International application number:
**PCT/EP2003/005273**

(87) International publication number:
**WO 2003/101043 (04.12.2003 Gazette 2003/49)**

# (54) A METHOD FOR DETERMINING THE MINIMUM COST INSTALLATION FOR APPARATUSES OF A FIXED TELECOMMUNICATION NETWORK

EINE METHODE ZUM BESTIMMEN DER MINIMALEN KOSTEN FÜR GERÄTE EINES FESTNETZES

PROCEDE DE DETERMINATION DU COUT MINIMUM D'INSTALLATION DES APPAREILS D'UN RESEAU DE TELECOMMUNICATION FIXE

(84) Designated Contracting States:
**AT BE BG CH CY CZ DE DK EE ES FI FR GB GR HU IE IT LI LU MC NL PT RO SE SI SK TR**

(30) Priority: **24.05.2002 IT TO20020441**

(43) Date of publication of application:
**23.02.2005 Bulletin 2005/08**

(73) Proprietor: **Telecom Italia S.p.A.**
**20123 Milano (IT)**

(72) Inventors:
- **CARELLO, Giuliana,**
  **POLITECNICO DI TORINO**
  **10129 Torino (IT)**
- **DELLA CROCE, Federico,**
  **Polotecnice Di Torino**
  **10148 Torino (IT)**
- **QUAGLIOTTI, Marco,**
  **Telecom Italia S.p.A.**
  **10148 Torino (IT)**
- **TADEI, Roberto,**
  **Politecnico Di Torino**
  **10129 (IT)**

(74) Representative: **Giannesi, Pier Giovanni**
**Pirelli & C. S.p.A.**
**Viale Sarca, 222**
**20126 Milan (IT)**

(56) References cited:
**EP-A- 1 091 544** **US-A- 5 216 591**

- **MELLIA M ET AL: "OPTIMAL DESIGN OF LOGICAL TOPOLOGIES IN WAVELENGHT-ROUTED OPTICAL NETWORKS WITH MULTICAST TRAFFIC" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY: IEEE, US, vol. 3 OF 6, 25 November 2001 (2001-11-25), pages 1520-1525, XP001054833 ISBN: 0-7803-7206-9**
- **DE MIGUEL M ET AL: "TELECOM NETWORK PLANNING FOR DEVELOPING COUNTRIES" ALCATEL TELECOMMUNICATIONS REVIEW, ALCATEL, PARIS CEDEX, FR, XP007005272 ISSN: 1267-7167**
- **MASE K ET AL: "TRAFFIC DESIGN METHOD FOR LARGE-SCALE SWITCHED TELECOMMUNICATION NETWORKS" ELECTRONICS & COMMUNICATIONS IN JAPAN, PART I - COMMUNICATIONS, SCRIPTA TECHNICA. NEW YORK, US, vol. 78, no. 8, 1 August 1995 (1995-08-01), pages 10-22, XP000547241 ISSN: 8756-6621**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 508 224 B1

Printed by Jouve, 75001 PARIS (FR)

## Description

TECHNICAL FIELD

The present invention relates to telecommunication systems and in particular it pertains to a method for determining the installation of minimum cost for the apparatuses of a fixed telecommunication network.

BACKGROUND ART

As is well known, three fundamental factors play an essential role in telecommunication networks: services, technologies and the networks themselves. Required by the customer, or by the final users, services assure returns for the operators and, consequently, enable investments in infrastructures and technological innovation.

Services can be classified in two macro-categories: the "streaming" type, i.e. the transfer of voice or video-conferencing streams, and the "block transfer" type, such as file transfer or Internet surfing. The GoS (Grade of Service) parameter measures the quality of service perceived by the final user.

Technologies allow transporting the service to the user. They can be based both on circuit switching, such as TDM (Time Division Multiplexing) broadly used in telephony, and on packet switching, used in data networks, including the Internet. Technologies evolve rapidly in view of the need always to offer new services, new performance and lower costs, entailing the need for constant upgrades to networks.

Networks are the complex physical structures that allow to transport the traffic generated by the services offered to the customer. They are constituted by nodes, where the apparatuses that perform the switching are installed, and by the related links.

It is clearly very important to have optimal planning of the network, allowing to determine the structure with the lowest construction cost, i.e. to dimension the links between access nodes and transit nodes, to determine the number and position of the transit nodes, to determine the associations between the access nodes and the transit nodes, to dimension the links between transit nodes minimising the total installation cost of apparatuses and links.

Methods are known and have been published which deal with the problems linked with locating transit mode in a two-layer network (in literature, the problem is known as "HUB LOCATION" or "PLANT LOCATION"). See for instance the review paper Klincewicz J. G., Hub location in Backbone/Tributary network design: a review, Location Science 6, Pergamon Press, 1998.

The reference characteristics for the methods meant to solve this kind of problems are:

1. the cost model (subdivided into node costs and link costs)
2. capacity constraints (both of transit node and of link)
3. the type of homing (single, dual free, dual with fixed pairs, generic multiple with N transit nodes)
4. the design carried out, taking into account the layers of grade of service of the network to be offered to the final customer.

The most significant methods dedicated to solving this class of problems, described in the aforementioned article, are the following:

- Monma and Sheng (1986) which takes into account the costs of the links and of the nodes, the capacity of the connections and that of the nodes, allows only for single homing, and takes into account delay constraints for packet switched networks.
- Siriam and Garfinkel (1990) which takes into account only the cost of the links (not of the nodes), takes into account link capacity constraints, and provides for homing on two transits but in the very special condition in which transits are selected by two sets of distinct candidates, defined beforehand. It does not take into account grade of service constraints.
- Ernst and Krishnamoorthy (1996b) which takes into account the costs of the links and of the nodes and the capacity of the nodes, but allows only the single homing and does not take into account the grade of service.

BRIEF DESCRIPTION OF THE INVENTION

With respect to the aforesaid method, the method of the present invention solves the problems linked with system optimisation with completely meshed transit node configuration and tributary star access network.

Moreover, the method of the present invention includes and extends the aforesaid methods since it takes into account:

- the costs of nodes and links;
- the capacity constraints of the connections;
- the capacity constraints of the nodes

and allows:

- single homing,
- dual homing in a more general situation than the Siriam and Garfinkel method, i.e. without the constraint of defining beforehand two subsets of transit nodes within which to choose the two transit nodes for a given access nodes;
- the consideration of the grade of service of packet switched traffic.

Lastly, the method of the invention allows to take into account the following additional characteristics, not provided by any of the three above methods or by any other known ones:

- the ability to connect each access node to the transit network, in a way definable by the user node for node, among the following three:
    - single
    - dual free
    - dual with fixed pairs (and consequently defines, in the case in which at least an access node requires fixed pair homing, the set of the fixed pairs of transit nodes)
- a multi-service network whereto is offered,traffic of three types: circuit switched, packed switched and cross connected, allowing to defined the grade of service provided to the final user for the first two types of traffic (probability of losing a call and packet delay respectively for circuit traffic and packet traffic).

In particular, these two characteristics, coupled with the simplicity and effectiveness of the method, make it innovative within location problems in the field of telecommunication networks.

The aim of the present invention is to implement a method for determining the optimal configuration, i.e. the least cost configuration for given infrastructure constraints and expected performance, of a fixed telecommunication network organised over two hierarchical layers: access layers and transit layer. Said implementation does not exhibit the limitations of the prior art because it specifically provides for the ability to obtain the least cost network configuration, while considering:

1) the homingmode of the access nodes to the transit nodes, selectable node by node according to one among the three following options: single, dual free or dual with fixed pairs;
2) the presence of three types of traffic: circuit switched, packet switched, cross connected;
3) the topology of the transit network and, consequently, traffic routing from source to destination and the dimensioning of the transit network itself.

The invention is adequate to solve in simple and effective fashion the problem of traditional switched networks (voice and ISDN), or of packet switched data network (X25, IP), or of transmission networks (SDH) or data networks used in virtual cross-connect circuit mode (FR, ATM), i.e. yet again, of mixed situations, where the goal of the network planner is the optimisation of the two-layer network structure considered herein.

BRIEF DESCRIPTION OF THE FIGURES

This and other characteristics of the present invention shall become readily apparent from the description that follows of a preferred embodiment, provided purely by way of non limiting example with the aid of the accompanying drawings, in which:

- Fig. 1 shows an overall diagram of the inputs required to apply the method for determining the minimum cost structure of a fixed telecommunication network according to the invention and of the outputs guaranteed by the method; in particular, among them, the construction cost of the network;
- Fig. 2 shows a schematic representation of a two-layer telecommunication network of the kind subjected to the planning method of the present invention;
- Fig. 3, which shows the generic model of the transit node, to be adapted on each occasion to the actual technology used and/or to the supplier of the apparatuses;

- Fig. 4 shows a high level flowchart of the method in question which is composed by a process in which three calculation macro-steps are carried out;
- Fig. 5 shows in detail the first step of the process, i.e. the determination of the initial network configuration;
- Fig. 6 shows the second step of the process, i.e. the network structure optimisation step;
- Fig. 7 shows the third step of the process, i.e. the post-optimisation step;
- Fig. 8 is a schematic representation of a transit network used as a support to the explanation of the traffic routing rules;
- Fig. 9 is a schematic representation of a transit network used as a support to the explanation of the method used for coupling the fixed pairs of transit nodes;
- Fig. 10 is a schematic representation of a network used as a support to the explanation of the method used for associating the access nodes to the transit nodes.

DESCRIPTION OF A PREFERRED EMBODIMENT

With reference to Fig. 1, the method 10 for determining the lowest cost network configuration, for instance for traditional telephone networks or for IP data networks, provides for a set of inputs constituted, in detail, by the following information.

The location of the access nodes 20, i.e. the list of access nodes and the related location of their installation.

For each node, the type 30 of homing to the transit mode must also be specified. The allowed types are: single (i.e. an access node is connected to a single transit node), dual free (i.e. an access node is connected to two transit nodes without additional constraints), dual with fixed pairs. In this latter mode the transit nodes, whose number is even and equal to 2N, must be organised in N pairs {(A1, B2), ..., (Ai, Bi), ... (AN, BN)}. All nodes for which this homing mode is required must necessarily connect to both nodes comprising one of the fixed pairs; for instance if an access node C for which the fixed pair homing mode is specified is connected to the node A3, then it must necessarily be connected to the node B3 as well. If there is at least one node for which the fixed pair homing mode is specified, the method 10 determines an even numbered set of transit nodes, organised in combinations of fixed pairs.

In relation to the treatment of traffic, access nodes are considered suited to perform three function types: circuit switching, packet switching and circuit cross-connecting. In mixed solutions, i.e. when considering a network infrastructure that treats multiple traffic types, the switching and cross-connecting functions on the access node are separate and the matrix of traffic between access nodes, another fundamental input for the system designated as 40, is assigned separately for circuit, packet and cross-connected traffic. As is usual in telecommunication networks, the intensity of circuit traffic is measured in Erlang and the intensity of cross-connected traffic and packet traffic is measured in bit/s. The latter value, together with the average packet length provided at the input 80, allows to obtained the average packet frequency, used when dimensioning the connections for the packet traffic. The nodes can exchanges traffic of one or more types with other nodes.

Given that Na is the number of access nodes, all three traffic matrices have dimensions Na x Na (i.e. the matrices have Na rows and Na columns). The traffic matrices will have nil elements where the corresponding source node (matrix row) and destination node (matrix column) do not exchange traffic of that particular type.

Traffic over connections between access nodes and transit nodes occupies separate, dedicated connections respectively for circuit switching, packet switching and cross-connected traffic. If one or two types of traffic are not exchanged by a given node, then the corresponding traffic relationships originated from and destined to this node will be nil, as absent will also be the related physical links connecting to the transit nodes.

Other information required by the system are the list 50 of the candidate locations for housing the installation of the transit nodes and the capacity and cost parameters 60 of the transit nodes. The apparatus capacity and cost parameters 60 are specified for each candidate location. The method 10 chooses whether or not to install a transit apparatus in each of the candidate locations of the list 50.

Fig. 2 provides the schematic representation of a two-layer telecommunication network, showing the transit network connected with complete mesh, comprising in this specific case by two fixed pairs 200 and 210 of transit nodes A1, B1 and A2, B2 and some access nodes C, D,..., I, which connect to the transit network according to the provided homing modes, i.e. single, dual free and dual with fixed pairs.

The generic node model used, shown schematically in Fig. 3, provides for a maximum access traffic handling capacity for each type of traffic: A max [Erlang] (310) for circuit traffic , $\Lambda$ max [bit/s] (320) for packet traffic and C max [bit/s] (330) for cross-connected traffic. It provides for a maximum number K max of interface modules for connecting the access links (340) and a similar parameter, M max, for transit modules (350). Each access module houses up to k access links (k=4 in the example of Fig. 3) and each transit module up to m transit connections (m=2 in the example of Fig. 3).

The traffic handled by a transit node of a given type is equal to the summation of the portion of traffic of that type offered by all access nodes connected to the transit node. This portion is normally 100% in the case of single homing, 50% in the case of dual homing.

The cost model of the transit mode entails an opening cost, i.e. a fixed cost which is considered if the transit node is installed in the candidate location, a cost for each configured access module (regardless of whether all its connections are used) and a cost to be attributed to each configured transit module (in this case, too, regardless of whether the module is fully used or not).

With reference to Fig. 1, the other set of data necessary for the system is constituted by the parameters and by the costs of the links 70 between:

1) access nodes and transit nodes;
2) between the nodes of the transit network.

The basic capacity of the links is assumed to be equal for all types of traffic on links between access and transit and, similarly, equal for all the links of the transit network (but whose value is generally different from the previous one). This means, for instance, that it is possible to use links E1 at 2 Mbit/s between access nodes and transit nodes and links STM1 at 155 Mbit/s for the links between transit nodes. When a single physical link between an access node and the related transit node (or on the two topological segments between the access node and its two transit nodes in the case of dual homing) is not sufficient, the link can be provided with multiple units with basic capacity. Moreover, the traffic of the three types is transported on the network (both access and transit) separately on physical links dedicated to each of the three types.

The cost of the links is provided by means of two matrices: the matrix of the costs between access nodes and candidate nodes (matrix having dimensions Na x Nc, where Na and Nc are respectively the number of the access nodes and candidates) and the matrix of the costs between candidate nodes (matrix having dimensions Nc x Nc). The values in the two matrices relate respectively to the annual cost (or referred to another period) of the individual connection with basic access and transit capacity. It is observed that in a real context the cost of the links, for instance if rented from an operator who offers connectivity services, depends both on the basic capacity of the links and on the geographic distance of the segment. The dependency on these two factors is such that cost grows with respect to both factors. Said growth is normally non linear, in the sense that a link with capacity 2C normally has less than twice the cost of two links with capacity C and a link whose length is 2L has less than twice the cost of two links whose length is L. The aforesaid cost matrices thus depend on the nominal value of the basic capacity of the link and, while they are linked to the geographical distances between locations, are nonetheless normally not directly proportional thereto.

Lastly, in regard to the system input data, the set of parameters used for dimensioning the links is provided. In particular, for dimensioning the links which transport circuit switched traffic, the following parameters are provided: the number of channels (or circuits) usable on the base access link (for instance, in the presence of E1 base links at 2 Mbit/s, the value to use is 30), the degree of loss of a call on the access link (i.e. the probability of call lock, typically set to 1%, which conventionally expresses the grade of service for circuit traffic), the maximum utilisation of the access link (value ranging between 0 and 100%, typically in the order of 70-80%: this expresses the maximum utilisation of the capacity of the link in the presence of the design traffic load). The same parameters are defined and assigned for transit links.

For packet traffic the parameters are: average packet length and packet length variance, the capacity of the base link in bit/s (for base links E1 at 2 Mbit/s could be 1.8 Mbit/s), the maximum average packet delay allowed on the access link (i.e. the grade of service parameter for packet traffic), the maximum utilisation allowed on the access link (similar to the defined for circuit traffic, typically 80%). All listed parameters, except packet length and variance (which do not depend on the network portion in which they are observed), are also defined for the transit links.

For cross-connected traffic, the parameters are: capacity of the base link in bit/s and maximum utilisation (e.g. 70%), both defined for the access link and for the traffic link.

With reference to Fig. 1, the results produced by the method 10 are the dimensioning of the access links 90, i.e. the links needed to connect the access nodes to the transit nodes, distinct and separate for each type of traffic, the list 100 of the transit node selected within the set of the candidate nodes, their possible arrangement into fixed pairs and the resulting node configuration (access and transit interface modules) for each site, the associations 110 between access nodes and transit nodes (single or dual depending on the mode selected for the access node), the dimensioning of the links 120 on the transit network for each type of traffic, the economic costs of construction of the network 130 which comprises the costs of the transit nodes installed in their configuration and of the necessary access and transit links.

Fig. 4 shows the macro-function flowchart of the method of the present invention. According to the method 10, the input data 900 (which corresponds to the set of 20, 30, 40, 50, 60, 70, 80 as per Fig. 1, already described in detail) are provided, and a sequence of three calculation steps is effected: a first step of calculating the initial configuration 1000, a second optimisation step 2000, a third post-optimisation step 3000. At the end, the process obtains the least cost network configuration 9000 (which corresponds to the set of 90, 100, 110, 120, 130 as per Fig. 1, described above).

The first step 1000, i.e. the determination of the initial configuration, shall now be examined.

Before starting the actual optimisation step, the method carries out the step of determining an initial solution.

The set of operations to be followed are schematically shown in Fig. 5, where the input data 900 are provided

to the procedure 1000 which determines the initial solution 1100 which is used by the subsequent calculation step, i.e. by the optimisation.

The first operation of the procedure 1000 is the dimensioning 1005 of the access links.

The number of access links towards the transit nodes does not depend on the choices made on the transit network but solely on the traffic matrix, on the type of homing of the access node (single or dual), and on the link parameters (capacity, maximum utilisation of the link for each traffic type) and grade of service in the cases of packet switched and circuit switched traffic.

In terms of types of homing, in the case of single homing all traffic is attributed to the sole segment that re-links the access note to its transit node (not yet known, at this stage), whilst in the presence of dual homing the traffic offered to each of the two segments that re-link the access node to the transit network is halved (the known principle of 50% load sharing is applied). The above applies for all types of traffic offered by that particular access node.

The dimensioning of the access links for switched traffic is achieved using Erlang's known Formula B:

$$B(N;A) = \frac{A^N}{N! \sum_{k=0}^{N} \frac{A^k}{k!}}$$

Erlang's Formula B expresses the probabilities of call congestion and time congestion for a user who attempts to access a set of N resources (channels), when an offered traffic equal to A [Erlang] bears on that set of resources.

To calculate the minimum number of channels necessary to satisfy the desired degree of loss B on the $i^{th}$ access link, all originated traffic, destined to the same access node A(i) must be summed and Erlang's Formula B must be inverted.

$$N_i = B^{-1}(A_i;B)$$

For the efficient numeric inversion of Erlang's Formula B, as well as for a more in-depth discussion and details on the theory and practice of traffic engineering in telecommunication networks, please see the text "Ingegneria del traffico nelle reti di telecomunicazioni" [Traffic Engineering in Network Telecommunications], M. Buttò, G. Colombo, A. Tonietti, T. Tofoni. Editrice SGRR, L'Aquila, 1991.

Now, given that the base access link has a modularity equal to Mod, the number of links necessary to the access Node Ci is equal to the integer greater than (Ni/Mod). If a maximum utilisation rho of the links of less than 100% (for instance rho = 0.7) is specified, the following verification must be made: if Ai (1-B(Ai,Ci*Mod))/(Ci*Mod) > rho then Ci is set equal to the integer greater than Ai/(Mod*rho). In this way, a utilisation of the links always smaller than or equal to rho is assured.

The access dimensioning for packet switched traffic is obtained with the formulas that, within the theory of queues, describe the behaviour of MG1 systems.

In essence, it is necessary to determine the number of parallel access links necessary for the stream of packets (whose total incoming frequency is given by the sum of the bit rates in [bit/s] offered by the node divided by average packet length), subdivided into equal parts between the various parallel access links, determines an average packet delay that is no greater than the average maximum delay specified as grade of service. The formulas that provide the packet delay in a MG1 system, which allows to correlate it with the capacity of the link, as well as with the variance of the packet length, are found, for instance, in the traffic engineering text mentioned above. It is noted that, unlike the case of circuit traffic, in the case of packet traffic it is not sufficient to sum the traffic outgoing from the node to the traffic incoming into the node and then apply the inverse Erlang Formula B. In the case of the packet traffic, due to the single-directional nature in the employment of the link resource, it is necessary to calculate the outgoing traffic and the incoming traffic separately, to execute the dimensioning for both transmission directions and to retain the greater of the two values as the result of the dimensioning. The maximum utilisation factor is applied reducing the capacity of the single link to the value of the nominal capacity of the base access link multiplied times the utilisation factor specified for packet traffic.

Lastly, the dimensioning of the access links for cross-connected traffic is obtained evaluating the greater integer of the division between the summation of the band outgoing from (incoming into) the node and the capacity of the base access link appropriately reduced to the value of maximum utilisation. The number of necessary base access links is equal to the greater value between those evaluated for traffic outgoing from and traffic incoming into the node.

After calculating the access links needs, which do not change during the subsequent calculation operations, an initial solution is determined, represented by a set of transit nodes and by a first hypothesis of association between

access nodes and transit nodes. The initial solution is determined by an algorithm of the "greedy" type for plant location, articulated as follows. Initially, the set of residual candidate nodes is the complete one, provided as input data item, whilst the set of transit nodes, final goal of the method, is empty. The steps are as follows:

1) The residual candidate nodes are sorted based on a functional obtained for each residual candidate node by summing the values of the minimum cost of the base links from the candidate to all access nodes (1010);
2) The best residual candidate node is added to the set of transit nodes; this is the node with the minimum value of the functional as calculated above; the same node is subtracted from the set of residual candidate nodes (1020);
3) If the set of transit nodes offers a traffic handling capacity sufficient to serve all access nodes, for each type of traffic, a set of reference traffic nodes is obtained, moving to step 4), otherwise returning to step 1) (1030);
4) Given the first set of the transit nodes, the fixed pairs (1040) are identified (only in the case in which there is at least an access node requiring this type of homing) and the homing, i.e. the associations between access nodes and transit nodes (1045), is performed by means of a "greedy" algorithm provided by Martello and Toth for the solution of General Assignment Problems (this type of problem is in fact known in the literature as GAP, General Assignment Problem). That algorithm is described in "Knapsack problems-Algorithms and Computer Implementations", Martello S., Toth P., New York, Wiley and Sons, 1990. The algorithm is described in detail below in the part dedicated to the determination of the homing of access to transit nodes in the second step of the procedure (i. e. the optimisation step).
5) The transit node is dimensioned and the access and transit module requirements on the transit nodes are determined (1050). It is verified (1060) that the connections of the previous point generate a number of access and transit modules for each transit node that is compatible with the capacity constraints assigned to candidate nodes. If the check has a positive outcome, the procedure for determining the initial solution ends, otherwise the procedure returns to step 1) to increase the number of transit nodes in order to enhance the total housing potential for links on transit nodes.

The dimensioning of the links of the transit network must be performed every time a transit node configuration hypothesis is reached (selection of the nodes and combinations in fixed pairs) as well as a hypothesis of the connection of the access nodes to the transit nodes. This takes place, for instance, in the step of searching and calculating the initial solution (Fig. 5, block 1050), during the exploration of the neighbourhood in the course of the optimisation step and during the exploration of the neighbourhood in the course of the post optimisation step.

The dimensioning of the transit links is carried out with the same principles of traffic engineering set out for the dimensioning of the access links, i.e. uses Erlang's Formula B for circuit switched traffic, the model MG1 for packet traffic and the simple sum of the band to be transported in the case of cross-connected traffic. The traffic contributions of the source-destination matrices between access nodes, carried over to the transit network, take into account the connections of the access nodes and simple traffic routing rules.

The contribution of the two access nodes, both connected with single connection, is attributed to the direct link between the transit nodes if the two nodes are not connected to the same transit node, or it is not attributed to any segment of the transit network if the nodes are connected to the same transit node. For instance, with reference to Fig. 2, traffic between the access nodes F and C transits on the segment between the nodes B1 and A2, traffic between the access nodes F and H does not transit on any segment of the transit network.

In the case of access nodes connected to fixed pairs, the traffic does not load the transit network if the access nodes that exchange traffic are connected on the same pair, whilst if this is not true then the 4 directrices that connect the two pairs of transit nodes are loaded with 25% of relationship traffic. In Fig. 2, the access nodes D and G for instance attribute one fourth of their relationship traffic on the segments A1-A2, B1-B2, A1-B2, B1, A2.

In the case of pairs of access nodes with free pair connection, the principle used provides for 25% of the traffic exchanged by the two nodes to be subdivided among the 4 potential segments linking the two connection pairs.

With reference to Fig. 8, the box 810 shows the situation for which two access nodes E and F are connected to two separate pairs of nodes A, B and C, D respectively. Setting to 100 the traffic directed from and to F, traffic on the transit network is equitably divided in 4 identical fractions of 25 on the four segments A-C, A-D, B-C, B-D with the direction indicated by the arrows.

When the two access nodes E and F share one of the connecting transit nodes, the situation is that of the box 820 where the shared node is the transit node B. With respect to the situation 810, the node D now coincides with B, the segment A-D is superposed to A-B and the segment B-D to the segment B-B, i.e. with the node B itself. The situation of, attribution of the 4 traffic streams to the transit network is highlighted in the box 820.

Lastly, when both connection transit nodes of the access nodes E and F coincide, the four segments of the box 810 collapse into one, the one that connects in the specific case the transit nodes A and B, which is loaded with 25% of relationship traffic from E to F on each of the two directions, i.e. with 25 from A to B and 25 from B to A, as shown in the box 830.

The dimensioning of the transit nodes is carried out using the node model of Fig. 3 illustrated above, determining the number of access modules needed to accommodate all connected access links (for the three types of traffic) and the number of transit links connected to the node (for the three types of traffic) determined with the dimensioning of the transit network.

At the end of the algorithm described above, i.e. when the transit nodes have been chosen, the fixed pairs formed, the homing made, the transit network dimensioned and the consistency of all variables has been verified, the economic evaluation of the solution is carried out, block 1070 of Fig. 5, which consists of calculating the cost of the network, obtained as the sum of the costs of the transit nodes (fixed costs + interface module costs), of the cost of the access links and of the cost of the transit links.

The second step 2000, i.e. optimisation, shall now be examined.

The purpose of the optimisation step is to improve the initial solution, i.e. the reduction of the network construction cost, by means of a local search on the number and location of the transit nodes.

The execution of this calculation step of the method requires experience and knowledge of operative search techniques, and specifically of local search techniques.

Fig. 6 shows the flow of operations of this step of the process 2000. From the initial solution 1100, the algorithm described in detail below is executed and the intermediate solution 2100 is reached, which constitutes the initial condition to subject to the third step of the subject method, called post optimisation.

To speed up the local search, a two-stage "neighbourhood" is constructed, well known in operative search practice. The term "neighbourhood" means the manner for determining a set of solutions, i.e. configurations of allowed values for the variable of the problem, which differ minimally from a given reference solution (configuration). Initially, to, generate a new solution starting from the initial one, all candidate nodes are considered and eliminated or added one at a time to the set of transit nodes depending on whether they are a part thereof or not. A neighbourhood is thereby obtained, made of configurations for which the number of transit nodes differs by a single unit from the initial solution. (For instance, if the set of transit nodes T has Nt nodes and the number of residual candidates C has Nc nodes, the number of the neighbourhood is equal to Nt+Nc, i.e. to the number of nodes that can be eliminated from the set T plus the number of nodes which can be added to the set T. In Fig. 6, said mode is represented in the left part of the diagram where 2010 shows this form of exploration of the neighbourhood.

When the neighbourhood obtained with these two operations (elimination and addition) has no better solutions than the current one, an expanded neighbourhood is explored, in which near solutions are obtained with addition and elimination operations as well as exchanging each transit node with each candidate node not present in the initial solution. The number of transit nodes is thereby left unchanged, but their location is modified. The neighbourhood subjected to addition, elimination and exchange is the one shown in the right part of the diagram, where 2050 shows this extended search option.

Once the set of transit nodes describing the new solution is defined, it is necessary to determine within it the fixed pairs (if required) and to define the connections of the access nodes to the transit nodes.

For the selection of the fixed pairs, the principle of minimisation of the sum of the basic costs among the elements of the same pair is used. This principle heuristically favours the reduction of the costs of connection of the access nodes to the transit nodes. The algorithm operates as follows.

1) For each transit node N(i) not belonging to a fixed pair, the closest transit node N1(i) and the second closest node N2(i), both not belonging to previously defined fixed pairs, are determined;

2) Among the aforesaid the transit nodes N(i) (i.e. those that do not belong to a previously formed fixed pair), the transit node N(K) is selected, such that the difference between the cost of the basic transit link between N(K) and N1 (1), and the cost between N (K) and N2 (1) is the greatest. In this way the node N(K) is prevented from being paired, in a subsequent step, with a very distant node, and the minimisation of the average distances between nodes comprising the same fixed pair is heuristically pursued. For instance, let us suppose that the set of transit nodes not yet comprised in a fixed pair to be (N(2), N(4), N(7) N(13)}.

The situation is represented in Fig. 9, where the numbers shown in correspondence with the links represent the costs of the basic link. The following table shall now be examined:

| N(i) | N1(i) | N2(i) | Δ |
|---|---|---|---|
| N(2) | N(4), 2 | N(7), 6 | 4 |
| N(4) | N(2), 2 | N(13), 4 | 2 |
| N(7) | N(13), 3 | N(4), 5 | 2 |
| N(13) | N(7), 3 | N(4), 4 | 1 |

The table indicates, for each node N(i), the pair N1(i) and N2(i) of respectively closest and second closest nodes, with, next to each, the cost of the link with the node N(i) and the difference A between the two costs. The node selected for

the pairing in the example of Fig. 9 is N(2) which is paired with N(4) because it has the greatest cost difference (i.e. 4) between its closest node (N(4)) and the second closest (N(7)).

3) The nodes N(K) and N1(K) form a new fixed pair;

4) If the number of transit nodes not belonging to fixed pairs is equal to 2, the remaining nodes form the last fixed pair and the procedure ends, otherwise the algorithm returns to step 1) to form a new pair.

This algorithm is applied only in the presence of connections to fixed pairs and it is represented in the dashed block 2020 of Fig. 6.

The choice of connections is made with the algorithm due to Martello and Toth, previously mentioned because it is used in the search for the initial solution; said algorithm is described below.

The algorithm defines the connections, access node by access node, exploiting a desirability parameter F(i,j) = Traff(i)/Z(i,j), which shows the advantage of connecting the access node A(i) to the transit node N(j), where Z(i,j) is the cost of the basic link from N(i) to N(j)j, Traff(i) is total traffic exchanged by the node A(i). The desirability parameter must be defined for each type of traffic, since the connection of the access nodes to the transit nodes is established independently for each type of traffic. (For example, an access node A(i) in single connection, which generates traffic of the three types can be connected to the transit node N(j) for circuit traffic, to the node N(h) for packet traffic and to the node N(k) for cross-connected traffic).

The steps of the algorithm, to be completed for each type of traffic, are as follows:

1) For each access node A(i), the transit nodes are sorted by decreasing value of the desirability parameter F(i,j);

2) The access node A(K) is found that has the most loss, if the connection node selected is the second best transit node N2(K) instead of the first N1(K), where the best transit node is the one with the least link cost with the node A(i). The heuristic principle used is similar to that of step 2) of the criterion for selecting the fixed pair and is schematically shown in Fig. 10. The access nodes {A(1), A(2), A(3) A(4)} have link costs towards the two transit nodes that are closer than the set {N(2), N(4), N(7), N(13)} as shown schematically in Fig. 10. The table that follows:

| A | N1 | N2 | Δ |
|---|---|---|---|
| A(1) | N(4), 3 | N(2), 5 | 2 |
| A(2) | N(13), 2 | N(4), 7 | 5 |
| A(3) | N(7), 1 | N(13), 7 | 6 |
| A (4) | N(2), 5 | N(4), 6 | 1 |

indicates, for each access node A(i) the closest transit node N1(i) and second closest transit node N2(i) and, next to each, the associated link cost, as well as the difference Δ between the link cost towards the second closest and the closest transit node. In this specific case, the node to be selected is A(3) which is connected to the node N(7) because the difference A is the greatest.

1) The node A(K) is connected to the best candidate;
2) The process is reiterated, connecting the next access node.

In the case of access nodes connected to fixed pairs, the method is the same but the parameter used is that of desirability of the fixed pair, defined as G(i, t)=F(i, j)+F(i, k) where A(i) is the access node and t is the fixed pair formed by the transit nodes N(j) and N(k).

For the selection of the connections and the consequent calculation of the target function, only in the case of solutions obtained exchanging the transit node N(i) with the candidate node N(j) (the second type of neighbourhood described), the rapid connection method is used, which comprises the following three steps.

1) The access nodes whose distance from N(i) is less than that of their current reference transit node are connected to the candidate node N(j) just inserted in the set of transit nodes;
2) The order of connection of the access nodes to the transit nodes of the starting solution, produced by the previously described Martello and Toth algorithm, is followed, keeping the previous connections unchanged until a node connected to N(i) is encountered: this node now is no longer part of the transit nodes, but rather of the candidate nodes ;
3) The Martello and Toth algorithm is applied for the optimal connection of the access nodes to the transit nodes for all remaining nodes without homing.

The rapid version of the connection method, as described above, is used when free pair dual homing or single homing are present, whilst it is not used if fixed pair dual homing are present.

In the flowchart of Fig. 6, the extended homing selection 2030 is applied both in the search with simple neighbourhood (left part of Fig. 6) and in the search with extended neighbourhood (right part of Fig. 6) when a transit node is

added or eliminated. The rapid version of the homing selection 2060 is applied only in the search with extended neighbourhood in the specific case of transit node replacement.

In light of the description of its sub-parts, the overall logic of the optimisation process of the second step of the subject method, shown in Fig. 6, is as follows. Starting from the initial solution 1100, the neighbourhood is explored with a cycle comprising the implementation of the neighbourhood generator of the 1st step 2010 by adding/removing a transit node at a time, the execution of the fixed pair selection 2020, the homing selection 2030 is made, links and transit nodes are dimensioned 2031, the solution is assigned its value 2035 (this block is the same used when creating the initial solution), the cost function improvement is verified 2040 and the best current solution may be updated with a lower cost solution. When the 1st local search stage exhausts its possibilities, the 2nd stage is started with a search on a more extended neighbourhood where replacements of transit nodes are taken into consideration, as well as additions and removals. The cycle is entered attempting replacements first, then again additions/removals through the neighbourhood generator 2050 of the 2nd stage, the fixed pair combination 2020 is selected, the decider 2070 is used to opt for the rapid version 2060 or extended version 2030 of the algorithm for homing selection, depending on whether respectively a replacement has been effected on the set of transit nodes or an addition/removal. Downstream of the dimensioning of the links and of the transit nodes 2031 and of determining the value of the current solution 2035, the decider block 2080 is used to verify the improvement of the cost function and, if the case warrants it, the best current solution is updated with a lower cost solution. When, starting from the best current solution, the entire neighbourhood provided by the 2nd stage generator is explored without improvements (after the replacements, the additions and removals of transit nodes are again attempted), the cycle ends with the exit from the decision block 2080 and the storage of the intermediate solution 2100.

The third step 3000, i.e. post-optimisation, shall now be examined.

Starting from the intermediate solution obtained as a result from the optimisation step, a post-optimisation step is implemented with the purpose of further reducing the implementation cost of the network. The post-optimisation step (3000 in Fig. 4) comprises two main parts:

1) local search on fixed pairs;
2) local search on homing.

The first part is an attempt to improve the identification of the fixed pairs of the current solution by means of a local search. The neighbourhood is obtained by exchanging, in all possible manners, the elements of each couple of pairs. To limit the number of neighbours and to keep low the sum of the distances between the elements of a same pair, the exchanges are made only if the elements of the two pairs have a distance lower than the average distance between all candidate nodes. Once the new fixed pairs are established, the homing is decided with the Martello and Toth "greedy" algorithm, and the cost of the solution is assessed. In this way, the best choice of fixed pairs is found. This operation is carried out only if there are nodes requiring homing towards fixed pairs.

The second part of the last post-optimisation step keeps unchanged the set of transit nodes and the choice of fixed pairs and performs a local search on the homing of access nodes to the transit nodes. As an initial solution for this step, one or more solutions obtained from the post-optimisation step on the fixed pairs are used. Starting from the homing obtained in the post-optimisation step on the fixed pairs, a neighbourhood obtained with two operations is explored:

1) connecting an access node to a different transit node, provided the distance from the new node is smaller than that of the node whereto it was connected previously;
2) exchanging the homing of two access nodes, provided this operation leads to a decrease in the sum of the link costs.

Fig. 7 schematically shows the post optimisation process 3000.

The process starts from the intermediate solution 2100, obtained from the previous optimisation step, and the final solution 9000 is obtained with the calculation method 3000. In the presence of nodes requiring double homing with fixed pairs (otherwise the process directly moves on to the 2nd neighbourhood stage, i.e. the one for homing selection), the first part of the optimisation procedure is carried out, i.e. the sequence of blocks of the left sector of Fig. 7. The neighbourhood refined for the exchange of fixed pairs described above with the generator is explored 3010, the homing 3011 is selected with the method described previously (step 1045 of Fig. 5), the links and the transit nodes are dimensioned 3012 (as in step 1050 of Fig. 5) and the network is assigned values 3013 (as in step 1070 of Fig. 5), the verification of whether a solution of lower cost than the current one has been reached is completed with the decider 3020: if so, then the current least cost solution is updated and the process re-starts with a new neighbourhood, otherwise if it is possible to continue and find a new element of the neighbourhood, the process is reiterated, returning to the block 3010. After exhausting the possibilities of the fixed pair neighbourhood, the system moves on to the homing neighbourhood, in which neither the number of the transit nodes nor their combination in fixed pairs is changed any more. The homing neighbourhood, schematically shown in the right side of Fig. 7, is organised in two sequential sub-stages. The first sub-stage

A of the 2nd stage evaluates, by means of the neighbourhood generator 3030, the dimensioner 3031 (similar to 3012), the evaluator 3032 (similar to 3013) and the decider block 3040 all possibilities for improving the current solution, attempting to home an access node to a different transit node as described in detail above. The second sub-stage B of the 2nd stage evaluates, with the neighbourhood generator 3050, the dimensioner 3051 (similar to 3012), the evaluator 3052 (similar to 3013) and the decider block 3060 all possibilities for improving the current solution, attempting to exchange the homing of two access nodes as described in detail above.

Once the possibilities of the neighbourhood of the homing exchange are exhausted, the final solution 9000 is obtained, which is the result of the method.

The method previously illustrated can be advantageously implemented in telecommunication network planning device comprising a tool for determining a least cost installation for the apparatuses of the telecommunication network.

The method in particular may be implemented in the form of a computer program, i.e. as software which can be directly loaded into the internal memory of a computer comprising portions of software code which can be run by the computer to implement the procedure herein. The computer program is stored on a specific medium, e.g. a floppy disk, a CD-ROM, a DVD-ROM or the like.

## Claims

1. A method (10) for planning a fixed telecommunication network comprising an access network and a transit network, by determining a least cost installation for the apparatuses of said fixed telecommunication network, said apparatuses comprising nodes of the access network (C, D,..., I), which are able to perform different types of switching, in particular circuit switching, packet switching or circuit cross-connecting, and are connected according to single, dual free or dual fixed pair homing to nodes of the transit network (A1, A2, B1, B2), having a set of inputs (900) and being able to provide a set of results (9000), comprising the following steps:

    - the insertion of said set of inputs (900);
    - a first step of determining an initial network configuration (1000), in which a network structure consistent with the requirements of said set of inputs is determined, comprising dimensioning access links, selecting transit nodes, determining the homing of access nodes and of the transit nodes and dimensioning transit links, **characterised in that** it further comprises the steps of:

        - a second step of optimisation (2000), in which the initial network configuration is subjected to changes in the choice of the transit nodes and of the homing of the access nodes to the transit nodes, structured in two successive stages, each of which achieves the selection of fixed pairs, the selection of the homing of the access nodes to the transit nodes and the dimensioning of the transit links, the first by means of a local search entailing the addition or elimination of a transit node, the second one by means of a more extended local search, entailing additions, eliminations and replacements of transit nodes, aimed at reducing the cost of the network configuration obtained as the sum of the costs of the transit nodes, of the cost of the access links and of the cost of the transit links;
        - a third step of post-optimisation (3000), in which the combination in fixed pairs of the transit nodes and the homing of the access nodes to the transit nodes is modified, structured in three stages, whereof the first is executed only in the presence of fixed pair dual homing and provides, through a local search made exchanging the transit nodes of the fixed pairs, to determine the choice of the homing of the access nodes to the transit nodes and the dimensioning of the transit links, the second and the third ones provide, maintaining unchanged the number of transit nodes and the combination in fixed pairs, both the change of the homing of the access nodes and of the transit nodes by means of two different operating modes, and the dimensioning of the transit links, aimed at further reducing the cost of the network configuration obtained as the sum of the costs of the transit nodes, of the cost of the access links and of the cost of the transit links;
        - the delivery of said set (9000) of results, representative of the least cost installation for the fixed network apparatuses, comprising the dimensioning of the access links (90), necessary to connect the access nodes to the transit nodes, distinct and separate for each type of traffic, the list (100) of the transit nodes selected from the set of candidate nodes, their possible organisation in fixed pairs and the resulting node configuration, location by location, the associations (110) between access nodes and transit nodes, and the dimensioning of the links (120) on the transit network for each type of traffic.

2. Method as claimed in claim 1, **characterised in that** said set of inputs (900) is constituted by one or more of the following items of information:

- the list of the access nodes and the installation location (20);
- the type (30) of homing of the access nodes to the transit network: single, dual free, dual with fixed pairs;
- the traffic matrix between access nodes (40), assigned separately for circuit, packet and cross-connected traffic;
- average packet length(80);
- the list (50) of candidate locations to house the installation of the transit nodes;
- the capacity parameters and the costs of the transit nodes (60) for each candidate location;
- the parameters and costs of the links (70) between access nodes and transit nodes and between the transit nodes.

**3.** Method as claimed in claim 1, **characterised in that** said set of results (9000) further comprises the economic cost for constructing the network (130), which comprises the costs of the transit nodes installed in their configuration and of the necessary access and transit links.

**4.** Method as claimed in claim 1, **characterised in that** the first step of calculating the initial configuration (1000) comprises one or more of the following steps:

- dimensioning (1005) of the access links towards the transit nodes, as a function of the traffic matrix, of the type of homing of the access node, of the link and grade of service parameters, in the cases of packet and circuit switched traffic, where in the case of single homing all traffic is attributed to the only segment that links the access node back to its transit node, whilst in the presence of dual homing the traffic offered to each of the two segments that link back the access node to the transit network is halved;
- sorting (1010) the candidate nodes based on a functional obtained for each residual candidate node summing the values of the least cost of the base link from the candidate to all access nodes;
- adding (1020) to the set of the transit nodes the candidate node with the lowest value of the functional and subtracting the same node from the set of residual candidate nodes;
- if the set of the transit nodes offers a sufficient traffic handling capacity to serve all access nodes (1030), for each type of traffic, acquiring the set of reference nodes and executing the next step (1040), otherwise returning to said sorting step (1010);
- selecting the fixed pairs (1040), if there is at least an access node requiring this type of homing;
- selecting the homing (1045) by means of the Martello and Toth algorithm;
- dimensioning the transit network and determining the requirements of the access and transit modules on the transit nodes (1050), determining the number of access modules necessary to house all connected access links and the number of transit links connected to the node, determined by dimensioning the transit network;
- verifying (1060) whether the homing of the previous step generate for each transit node a number of access and transit modules that is compatible with the capacity constraints assigned to the candidate nodes, moving on to the next step (1070) if the outcome of the verification is positive, otherwise returning to said sorting step (1010) to increase the number of transit nodes;
- determining the economic value of the solution (1070) by calculating the cost of the network obtained as the sum of the cost of the transit nodes, of the cost of the access links and of the cost of the transit links.

**5.** Method as claimed in claim 4, **characterised in that** said dimensioning of the access links (1005) is conducted as follows:

- for switched traffic, the calculation of the minimum number of channels, necessary to satisfy the desired degree of loss on the $i^{th}$ access link, is performed by summing all originated traffic destined to the same access node and applying the inverted Erlang formula;
- for packet switched traffic, the formulas used are the ones that within the queue theory describe the behaviour of MG1 systems, to ensure that the packet stream is not subjected to an average delay exceeding a maximum average delay specified as grade of service;
- for cross-connected traffic, the upper integer of the division between the summation of the band outgoing from or incoming into the node and the capacity of the base access link reduced to the value of maximum utilisation, taking the highest value between those evaluated for traffic outgoing from the node and traffic coming into the node.

**6.** Method as claimed in claim 2, **characterised in that** for dimensioning the access links and the transit links which transport circuit switched traffic, among the input parameters (70) are the number of the channels or circuits usable on the base link, the degree of loss of a call on the link and the maximum utilisation of the link for circuit traffic, assigned separately for access and transit links.

**7.** Method as claimed in claim 2, **characterised in that** for dimensioning the access links and the transit links which transport packet switched traffic, among the input parameters (70) are average packet length, packet length variance, the maximum allowed average packet delay and the maximum utilisation of the link for packet traffic, assigned separately for access and transit links.

**8.** Method as claimed in claim 2, **characterised in that** for dimensioning the access links and the transit links which transport cross-connected traffic, among the input parameters (70) are the capacity of the base link and the maximum utilisation of the link, assigned separately for access and transit links.

**9.** Method as claimed in claim 2, **characterised in that** the capacity of the base link is assumed to be equal to a first value for all types of traffic on the links between access and transit and, similarly, equal to a second value for all links of the transit network.

**10.** Method as claimed in claim 2, **characterised in that** where a single physical link is not sufficient between an access node and the related transit node, or on the two topological segments between the access node and its two transit nodes in the case of dual homing, or on the segments of the transit network, multiple base capacity units are assigned to the link.

**11.** Method as claimed in claim 1, **characterised in that** the traffic of the three aforesaid types on both the access and transit network is forwarded separately on physical links dedicated to each of the three types.

**12.** Method as claimed in claim 3, **characterised in that** the cost of the links is provided by means of two matrices: the matrix of the cost of the links between access nodes and candidate nodes and the matrix of the costs of the links between the candidate nodes themselves, whose values respectively refer to the annual costs, or the cost for a different period, of the individual base capacity access and transit link.

**13.** Method as claimed in claim 1, **characterised in that** second optimisation step (2000) comprises one or more of the following steps:

- starting from the initial solution (1100), the neighbourhood is explored by means of a cycle which provides for implementing a 1st stage neighbourhood generator (2010) by adding/removing a transit node at a time;
- the fixed pairs are selected (2020);
- the homing is selected (2030);
- the links and transit nodes are dimensioned (2031);
- the value of the solution is found (2035);
- the improvement of the cost function is verified (2040) and, possibly, the best current solution is updated with a lower cost solution, reiterating the 1st stage (2010);
- when the 1st local search stage has exhausted its possibilities, a 2nd stage (2050) is initiated with search on a more extended neighbourhood, taking into consideration not only the addition and removal of transit nodes but also replacements, attempting replacements first and, subsequently, again additions/removals by means of the 2nd stage neighbourhood generator (2050);
- the selection of the fixed pairs is performed again (2020);
- the decider (2070) is used to opt for the rapid version (2060) or extended version (2030) of the homing selection algorithm, depending on whether a replacement or an addition/removal was performed on the set of transit nodes;
- the links and transit nodes are dimensioned (2031);
- the value of the current solution is found (2035);
- a decider block (2080) is used to verify the improvement of the cost function and, as the case may require, the best current solution is updated with a lower cost solution, reiterating the 2nd stage (2050);
- when, starting from the best current solution, the entire neighbourhood provided by the generator of the 2nd stage is explored without improvements, the step is ended by exiting the decider block (2080) and the intermediate solution is stored (2100).

**14.** Method as claimed in claim 13, **characterised in that** the fixed pairs are selected (2020), minimising the sum of the base costs between the elements of the same pair, in the following manner:

1) for each transit node (N(i)) not belonging to a fixed pair, the closest transit node (N1(i)) is determined as well as the second closest transit node (N2(i)), both not belonging to previously defined fixed pairs;
2) within the aforesaid transit nodes (N(i)), not belonging to a fixed pair, the transit node (N(K)) is selected such

that the difference (Δ) between the cost of the base transit link between the third transit node (N(K)) and the first (N1(K)), and the cost between the third(N(K)) and the second (N2(K)) is the greatest;
3) a new fixed pair is formed with the third node (N(K)) and the first (N1(K));
4) if the number of transit nodes not belonging to fixed pairs is equal to 2, the last fixed pair is formed with the remaining nodes and the procedure ends, otherwise the initial step 1) is re-started to form a new pair.

**15.** Method as claimed in claim 13, **characterised in that**, for the homing selection (2030), the following steps are completed for each type of traffic:

- for each access node (A(i)), the transit nodes are sorted by decreasing values of a desirability parameter (F (i,j)), a function of the cost of the base link and of the traffic exchanged by the node;
- the access node (A(i)) with the greatest loss in terms of cost reduction is determined, if the second best candidate instead of the first is selected as homing node;
- the node (A(i)) is connected to the best candidate;
- the step is reiterated, connecting the next access node.

**16.** Method as claimed in claim 13, **characterised in that** free pair dual homing or single homing is selected (2030), only in case of solutions obtained exchanging the transit node (N(i)) with the candidate node (N(j)), using a rapid homing method comprising the following steps:

- the access nodes whose distance from the node (N(j)) is shorter than that of their current reference transit node are connected to the (N(j)) node that has just been inserted in the set of the transit nodes;
- the connection order of the starting solution, produced by the Martello and Toth algorithm, is followed, maintaining the previous connections until encountering a node connected to the transit node (N(i)), no longer part of the set of transit nodes but rather of the set of candidate nodes;
- the Martello and Toth algorithm is applied to all remaining nodes lacking homing.

**17.** Method as claimed in claim 1, **characterised in that** said third post-optimisation step (3000) comprises one or more of the following steps:

- starting from said intermediate solution (2100), the neighbourhood refined for the exchange of fixed pairs by means of the generator is explored (3010), in the presence of nodes requiring dual fixed pair homing;
- the homing is performed (3011);
- the links and transit nodes are dimensioned (3012);
- the network value is found (3013);
- using a decider (3020), the verification is made as to whether a lower cost solution than the current one has been achieved: if so, the current least cost solution is updated, re-starting with a new neighbourhood, otherwise if it is possible to continue and find a new neighbourhood element, the step is reiterated (3010);
- after exhausting the possibilities of the fixed pair neighbourhood, the step moves on to the homing neighbourhood, organised in two sequential sub-stages, in the first of which, using the neighbourhood generator (3030), the dimensioning block (3031), the evaluation block (3032) and the decider block (3040) all possibilities of improving the current solution by connecting an access node to a different transit node are assessed, in the second sub-stage all possibilities of improving the current solution, by exchanging the homing of two access nodes, are evaluated by means of the neighbourhood generator (3050), the dimensioning block (3051), the evaluation block (3052) and the decider block (3060);
- after exhausting the possibilities of the homing exchange neighbourhood, the final solution is obtained (9000), which is the result of the method.

**18.** Software product directly storable in the internal memory of a computer comprising software code portions for implementing the method steps according to any of the claims from 1 to 17 when the software product is run on a computer.

**Patentansprüche**

**1.** Verfahren (10) zum Planen eines Telekommunikations-Festnetzes mit einem Zugangsnetz und einem Durchgangsnetz, durch Bestimmung einer Installation mit geringsten Kosten für die Geräte des Telekommunikations-Festnetzes, wobei die Geräte Knoten des Zugangsnetzes (C, D, ..., I) beinhalten, die verschiedene Arten von Schalten durchführen können, insbesondere Leitungsvermittlung, Paketvermittlung oder Schaltungsquerverbindung, und entsprechend einem Single-, freien oder Festpaar-Dual-Homing mit Knoten des Durchgangsnetzes (A1, A2, B1, B2) verbunden sind, einen Satz von Eingaben (900) besitzen und einen Satz von Ergebnissen (9000) liefern können, mit den folgenden Schritten:

- dem Einfügen des Satzes von Eingaben (900);
- einem ersten Schritt eines Bestimmens einer anfänglichen Netzkonfiguration (1000), in der eine Netzstruktur passend zu den Erfordernissen des Satzes von Eingaben bestimmt wird, mit einem Dimensionieren von Zugangsverbindungen, einem Auswählen von Durchgangsknoten, einem Bestimmen des Homing von Zugangsknoten und der Durchgangsknoten und einer Dimensionierung von Durchgangsverbindungen, **dadurch gekennzeichnet, daß** es weiterhin die Schritte aufweist:

  - einen zweiten Schritt eines Optimierens (2000), in dem die anfängliche Netzkonfiguration Veränderungen bei der Wahl der Durchgangsknoten und des Homing der Zugangsknoten zu den Durchgangsknoten, strukturiert in zwei aufeinanderfolgenden Stufen, von denen jede die Auswahl fester Paare erreicht, des Auswählens des Homing der Zugangsknoten zu den Durchgangsknoten und des Dimensionierens der Durchgangsverbindungen, das erstere mittels einer lokalen Suche, die das Hinzufügen oder die Beseitigung eines Durchgangsknotens auferlegt, das zweite mittels einer ausgedehnteren lokalen Suche, eines Auferlegens von Hinzufügungen, Beseitigungen und Ersetzungen von Durchgangsknoten, abzielend auf ein Verringern der Kosten der Netzkonfiguration, die als die Summe der Kosten der Durchgangsknoten, der Kosten der Zugangsverbindungen und der Kosten der Durchgangsverbindungen erhalten wird;
  - einen dritten Schritt einer Nach-Optimierung (3000), in dem die Kombination in festen Paaren der Durchgangsknoten und des Homing der Zugangsknoten zu den Durchgangskonten modifiziert wird, strukturiert in drei Stufen, von denen die erste nur in der Anwesenheit eines Festpaar-Dual-Homing ausgeführt wird und durch eine durchgeführte lokale Suche, die die Durchgangsknoten der festen Paare austauscht, ermöglicht, die Wahl des Homing der Zugangsknoten zu den Durchgangsknoten und das Dimensionieren der Durchgangsverbindungen zu bestimmen, die zweiten und die dritten ermöglichen, die Anzahl von Durchgangsknoten und die Kombination in festen Paaren unverändert beizubehalten, sowohl die Veränderung des Homing der Zugangsknoten und der Durchgangsknoten mittels zwei verschiedener Betriebsarten, als auch das Dimensionieren der Durchgangsverbindungen, abzielend auf eine weitere Verringerung der Kosten der Netzkonfiguration, die als die Summe der Kosten der Durchgangsknoten, der Kosten der Zugangsverbindungen und der Kosten der Durchgangsverbindungen erhalten werden;
  - das Ausgeben des Satzes (9000) von Ergebnissen, das für die Installation mit den geringsten Kosten für die Festnetz-Geräte repräsentativ ist, mit dem Dimensionieren der Zugriffsverbindungen (90), das erforderlich ist, um die Zugangsknoten mit den Durchgangsknoten zu verbinden, eindeutig und getrennt für jede Art von Verkehr, wobei die Liste (1000) von Durchgangsknoten aus dem Satz von Kandidatenknoten, ihre möglichen Konfiguration in festen Paaren und den sich ergebenden Knotenkonfiguration, Ort für Ort, den Verbindungen (110) zwischen Zugangsknoten und Durchgangsknoten ausgewählt ist, und dem Dimensionieren der Verbindungen (120) auf dem Durchgangsnetz für jede Art von Verkehr.

**2.** Verfahren nach Anspruch 1, **dadurch gekennzeichnet, daß**
der Satz von Eingaben (900) durch eines oder mehrere der folgenden Informationselemente gebildet wird:

- die Liste der Zugangsknoten und der Installationsort (20);
- die Art (30) des Homing der Zugangsknoten zum Durchgangsnetz: Single, Dual frei, Dual mit festen Paaren;
- das Verkehrsnetz zwischen Zugangsknoten (40), getrennt für jede Schaltung, jedes Paket und jeden querverbundenen Verkehr zugewiesen;
- eine mittlere Paketlänge (80);
- die Liste (50) von Kandidatenorten zum Aufnehmen der Installation der Durchgangsknoten;
- die Kapazitätsparameter und die Kosten der Durchgangsknoten (60) für jeden Kandidatenort;
- die Parameter und Kosten der Verbindungen (70) zwischen Zugangsknoten und Durchgangsknoten und zwischen den Durchgangsknoten.

**3.** Verfahren nach Anspruch 1, **dadurch gekennzeichnet, daß** der Satz von Ergebnissen (9000) weiterhin die wirtschaftlichen Kosten für eine Herstellung des Netzes (130) enthält, die die Kosten der in ihrer Konfiguration installierten Durchgangsknoten und der notwendigen Zugangs- und Durchgangsverbindungen enthält.

**4.** Verfahren nach Anspruch 1, **dadurch gekennzeichnet, daß**

der erste Schritt eines Berechnens der anfänglichen Konfiguration (1000) einen oder mehrere der folgenden Schritte aufweist:

- Dimensionieren (1005) der Zugangsverbindungen zu den Durchgangsknoten, als eine Funktion der Verkehrsmatrix, der Art von Homing des Zugangsknotens, der Verbindungs- und Verkehrsgüteparameter in den Fällen von Paket- und Leitungsvermitteltem Verkehr, wobei im Fall von Single-Homing aller Verkehr nur dem Segment zugeordnet wird, das den Zugangsknoten zu seinem Durchgangsknoten zurück verbindet, während in Gegenwart von Dual-Homing der jedem der zwei Segmente, die den Zugangsknoten zurück zum Durchgangsnetz verbinden, angebotene Verkehr halbiert wird;
- Sortieren (1010) der Kandidatenknoten auf der Grundlage einer Funktion, die für jeden Restkandidatenknoten erhalten wird, die die Werte der geringsten Kosten der Basisverbindung vom Kandidaten zu allen Zugangsknoten addiert;
- Hinzufügen (1020) des Kandidatenknoten mit dem niedrigsten Funktionswert zum Satz der Durchgangsknoten und Subtrahieren desselben Knotens vom Satz der Restkandidatenknoten;
- wenn der Satz der Durchgangsknoten eine ausreichende Verkehrsumschlagskapazität anbietet, um alle Zugangsknoten zu bedienen (1030), für jede Art von Verkehr Aufnehmen des Satzes von Bezugsknoten und Ausführen des nächsten Schritts (1040), ansonsten Zurückkehren zum Sortierschritt (1010);
- Auswählen der festen Paare (1040), wenn es zumindest einen Zugangsknoten gibt, der diese Art von Homing erfordert;
- Auswählen des Homing (1045) mittels des Martello- und Toth-Algorithmus;
- Dimensionieren des Durchgangsnetzes und Bestimmen der Erfordernisse der Zugangs- und Durchgangsmodule auf den Durchgangsknoten (1050), Bestimmen der Anzahl von Zugangsmodulen, die erforderlich sind, um alle verbundenen Zugangsverbindungen und die Anzahl von mit dem Knoten verbundenen Durchgangsverbindungen aufzunehmen, die durch die Dimensionierung des Durchgangsnetzes bestimmt sind;
- Verifizieren (1060), ob das Homing des vorhergehenden Schritts für jeden Durchgangsknoten eine Anzahl von Zugangs- und Durchgangsmodulen erzeugt, die mit den den Kandidatenknoten zugewiesenen Kapazitätserfordernissen kompatibel sind, Bewegen zum nächste Schritt (1070), wenn das Ergebnis der Verifikation positiv ist, ansonsten Zurückkehren zum Sortierschritt (1010), um die Anzahl der Durchgangsknoten zu erhöhen;
- Bestimmen des wirtschaftlichen Werts der Lösung (1070) durch Berechnen der Kosten des erhaltenen Netzwerks als die Summe der Kosten der Durchgangsknoten, der Kosten der Zugangsverbindungen und der Kosten der Durchgangsverbindungen.

**5.** Verfahren nach Anspruch 4, **dadurch gekennzeichnet, daß**
das Dimensionieren der Zugangsverbindungen (1005) wie folgt durchgeführt wird:

- für vermittelten Verkehr wird die Berechnung der minimalen Anzahl von Kanälen, die erforderlich ist, um dem gewünschten Verlustgrad auf der i-ten Zugangsverbindung zu genügen, durch Addieren alles entstandenen Verkehrs, der für denselben Zugangsknoten bestimmt ist, und Anwenden der invertierten Erlang-Formel durchgeführt;
- für paketvermittelten Verkehr sind die verwendeten Formeln die, die innerhalb der Wasrteschlangentheorie das Verhalten von MG1-Systemen beschreiben, um sicherzustellen, daß der Paketstrom keiner mittleren Verzögerung unterworfen wird, die eine als Verkehrsgüte bestimmte maximale mittlere Verzögerung überschreitet;
- für querverbundenen Verkehr wird das obere Integer der Division zwischen der Addition des aus dem Knoten herausgehenden oder in ihn hineingehenden Bands und der Kapazität der Basiszugangsverbindung auf den Wert maximaler Nutzung verringert, wobei der höchste Wert zwischen diesen für aus dem Knoten herausgehenden Verkehr und in den Knoten hineingehenden Verkehr ausgewerteten genommen wird.

**6.** Verfahren nach Anspruch 2, **dadurch gekennzeichnet, daß**
zum Dimensionieren der Zugangsverbindungen und der Durchgangsverbindungen, die leitungsvermittelten Verkehr transportieren, unter den Eingangsparametern (70) die Anzahl der Kanäle oder Schaltungen ist, die auf der Basisverbindung nutzbar sind, der Verlustgrad eines Rufs auf der Verbindung und die maximale Nutzung der Verbindung für Leitungsverkehr sind, getrennt für Zugangs- und Durchgangsverbindungen zugewiesen.

**7.** Verfahren nach Anspruch 2, **dadurch gekennzeichnet, daß**
für das Dimensionieren der Zugangsverbindungen und der Durchgangsverbindungen, die paketvermittelten Verkehr transportieren, unter den Eingangsparametern (70) eine mittlere Paketlänge, eine Paketlängenvarianz, die maximal erlaubte mittlere Paketverzögerung und die maximale Nutzung der Verbindung für Paketverkehr sind, getrennt für Zugangs- und Durchgangsverbindungen zugewiesen.

**8.** Verfahren nach Anspruch 2, **dadurch gekennzeichnet, daß** zum Dimensionieren der Zugangsverbindungen und der Durchgangsverbindungen, die querverbundenen Verkehr transportieren, unter den Eingangsparametern (70) die Kapazität der Basisverbindung und die maximale Nutzung der Verbindung sind, getrennt für Zugangs- und Durchgangsverbindungen zugewiesen.

**9.** Verfahren nach Anspruch 2, **dadurch gekennzeichnet, daß** die Kapazität der Basisverbindung als für alle Arten von Verkehr auf den Verbindungen zwischen Zugang und Durchgang gleich einem ersten Wert und ähnlich für alle Verbindungen auf dem Durchgangsnetz als gleich einem zweiten Wert angenommen wird.

**10.** Verfahren nach Anspruch 2, **dadurch gekennzeichnet, daß**, wo eine einzelne physikalische Verbindung zwischen einem Zugangsknoten und dem zugehörigen Durchgangsknoten nicht ausreichend ist, oder im Fall von Dual-Homing auf den zwei topologischen Segmenten zwischen dem Zugangsknoten und seinen zwei Durchgangsknoten oder auf den Segmenten auf dem Durchgangsnetz der Verbindung eine Mehrfach-Basis-Kapazitäts-Einheiten zugewiesen werden.

**11.** Verfahren nach Anspruch 1, **dadurch gekennzeichnet, daß** der Verkehr der drei vorbesagten Arten sowohl auf dem Zugangs- als auch dem Durchgangsnetz separat auf jeder der drei Arten zugewiesenen physikalischen Verbindungen weitergeführt wird.

**12.** Verfahren nach Anspruch 3, **dadurch gekennzeichnet, daß** die Kosten der Verbindungen mittels zweier Matrizen erhalten werden: die Matrix der Kosten der Verbindungen zwischen Zugangsknoten und Kandidatenknoten und die Matrix der Kosten der Verbindungen zwischen den Kandidatenknoten selbst, deren Werte sich jeweils auf die jährlichen Kosten beziehen, oder die Kosten für einen anderen Zeitraum der einzelnen Basiskapazitäts-Zugangs- und Durchgangsverbindung beziehen.

**13.** Verfahren nach Anspruch 1, **dadurch gekennzeichnet, daß** der zweite Optimierungsschritt (2000) einen oder mehrere der folgenden Schritte aufweist:

- startend von der anfänglichen Lösung (1100) wird die Nachbarschaft mittels einer Zyklus erforscht, der zum Realisieren eines Nachbarschaftsgenerators erster Stufe (2010) durch Addieren/Entfernen jeweils eines Durchgangsknotens ausgebildet ist;
- die festen Paare werden ausgesucht (2020);
- das Homing wird ausgesucht (2030);
- die Verbindungen und Durchgangsknoten werden dimensioniert (2031);
- der Wert der Lösung wird gefunden (2035);
- die Verbesserung der Kostenfunktion wird verifiziert (2040) und möglichst wird die beste gegenwärtige Lösung durch eine Lösung mit niedrigeren Kosten aktualisiert, Wiederholen der ersten Stufe (2010);
- wenn die erste lokale Suchstufe ihre Möglichkeiten erschöpft hat, wird eine zweite Stufe (2050) mit einer Suche in einer erweiterteren Nachbarschaft initiiert, wobei nicht nur das Hinzufügen und Entfernen von Durchgangsknoten berücksichtigt wird, sondern auch Ersetzungen, wobei zuerst Ersetzungen und nachfolgend wieder Hinzufügungen/Entfernungen mittels des Nachbarschaftsgenerators zweiter Stufe (2050) versucht werden;
- die Auswahl der festen Paare wird wieder durchgeführt (2020);
- der Entscheider (2070) wird verwendet, sich für die schnelle Version (2060) oder eine erweiterte Version (2030) des Homing-Auswahlalgorithmus zu entscheiden, abhängig davon, ob ein Ersetzen oder ein Hinzufügen/Entfernen auf den Satz von Durchgangsknoten durchgeführt wurde;
- die Verbindungen und Durchgangsknoten werden dimensioniert (2031);
- der Wert der gegenwärtigen Lösung wird gefunden (2035);
- ein Entscheiderblock (2080) wird verwendet, um die Verbesserung der Kostenfunktion zu verifizieren und, wenn der Fall es erfordern kann, wird die beste gegenwärtige Lösung mit einer Lösung mit niedrigeren Kosten aktualisiert, Wiederholen der zweiten Stufe (2050);
- wenn, beginnend von der besten gegenwärtigen Lösung die gesamte Nachbarschaft, die durch den Generator zweiter Stufe ausgebildet ist, ohne Verbesserungen erforscht wird, der Schritt beendet wird, indem der Entscheiderblock (2080) angeregt wird und die Zwischenlösung gespeichert wird (2100).

**14.** Verfahren nach Anspruch 13, **dadurch gekennzeichnet, daß** die festen Paare, wobei die Summe der Basiskosten zwischen den Elementen desselben Paars minimiert wird, auf die folgende Weise ausgewählt werden:

1) für jeden Durchgangsknoten (N(i)), der nicht zu einem festen Paar gehört, wird der am Nächsten liegende Durchgangsknoten (N1(i)) ebenso wie der am Zweitnächsten liegende Durchgangsknoten (N2(i)) bestimmt, die beide nicht zu vorhergehend definierten festen Paaren gehören;
2) innerhalb der vorgenannten Durchgangsknoten (N(i)), die nicht zu einem festen Paar gehören, wird der Durchgangsknoten (N(K)) derart ausgesucht, daß der Unterschied (Δ) zwischen den Kosten der Basisdurchgangsverbindung zwischen dem dritten Durchgangsknoten (N(K)) und dem ersten (N1(K)) und den Kosten zwischen dem dritten (N(K)) und dem zweiten (N2(K)) am größten ist;
3) ein neues festes Paar mit dem dritten Knoten (N(K)) und dem ersten (N1(K)) gebildet wird;
4) wenn die Anzahl von Durchgangsknoten, die nicht zu den festen Paaren gehören, gleich 2 ist, wird das letzte feste Paar mit den verbleibenden Knoten gebildet und der Ablauf endet, anderenfalls wird der Anfangsschritt 1) neu gestartet, um ein neues Paar zu bilden.

**15.** Verfahren nach Anspruch 13, **dadurch gekennzeichnet, daß** für die Homing-Auswahl (2030) die folgenden Schritte für jede Art von Verkehr beendet werden:

- für jeden Zugangsknoten (A(i)) werden die Durchgangsknoten durch Verringerung von Werten eines Erwünschtheitsparameters (F(i, j), einer Funktion der Kosten der Basisverbindung und des durch den Knoten ausgetauschten Verkehrs sortiert;
- der Zugangsknoten (A(i)) mit dem größten Verlust hinsichtlich einer Kostenverringerung wird bestimmt, wenn der zweitbeste Kandidat anstelle des ersten als Homing-Knoten ausgewählt ist;
- der Knoten (A(i)) wird mit dem besten Kandidaten verbunden;
- der Schritt wiederholt wird, wobei der nächste Zugangsknoten verbunden wird.

**16.** Verfahren nach Anspruch 13, **dadurch gekennzeichnet, daß** Feies Paar-Dual-Homing oder Single-Homing nur im Fall von Lösungen ausgewählt wird, die erhalten werden, wenn der Durchgangsknoten (N(i gegen den Kandidatenknoten (N(j)) ausgetauscht wird, wobei das schnelle Homing-Verfahren, das die folgenden Schritt aufweist, verwendet wird:

- die Zugangsknoten, deren Abstand vom Knoten (N(j)) kürzer als der ihres gegenwärtigen Bezugsdurchgangsknotens ist, werden mit dem (N(j)) Knoten verbunden, der gerade in den Satz von Durchgangsknoten eingefügt wurde;
- die Verbindungsreihenfolge der Startlösung, die durch den Martello- und Toth-Algorithmus erzeugt wurde, wird von einem Beibehalten der vorhergehenden Verbindungen gefolgt, bis ein mit dem Durchgangsknoten (N (i)) verbundener Knoten angetroffen wird, der nicht länger Teil des Satzes von Durchgangsknoten ist, sondern eher des Satzes von Kandidatenknoten;
- der Martello- und Toth-Algorithmus wird auf alle verbleibenden Knoten angewandet, bei denen kein Homing vorliegt.

**17.** Verfahren nach Anspruch 1, **dadurch gekennzeichnet, daß** der dritte Nachoptimierungsschritt (3000) einen oder mehrere der folgenden Schritte aufweist:

- beginnend von der Zwischenlösung (2100) wird die für den Austausch fester Paare mittels des Generators verfeinerte Nachbarschaft in der Gegenwart von Knoten, die ein Festpaar-Dual-Homing erfordern, erforscht (3010);
- das Homing wird durchgeführt (3011);
- die Verbindungen und Durchgangsknoten werden dimensioniert (3012);
- der Netzwerk wird gefunden (3013);
- unter Verwendung eines Entscheiders (3020) erfolgt die Verifikation, ob eine Lösung mit niedrigeren Kosten als die gegenwärtige erreicht wurde: wenn dem so ist, wird die gegenwärtige Lösung mit geringsten Kosten aktualisiert, mit einer neuen Nachbarschaft wiederbeginnend, anderenfalls, wenn es möglich ist, fortzusetzen und ein neues Nachbarschaftselement zu finden, wird der Schritt wiederholt (3010);
- nach einem Ausschöpfen der Möglichkeiten der Festpaar-Nachbarschaft bewegt sich der Schritt weiter zur Homing-Nachbarschaft, organisiert in zwei aufeinanderfolgenden Teilstufen, in deren erster unter Verwendung des Nachbarschaftsgenerators (3030), des Dimensionierungsblocks (3031), des Auswertungsblocks (3032) und den Entscheiderblocks (3040) alle Möglichkeiten einer Verbesserung der gegenwärtigen Lösung durch Verbinden eines Zugangsknotens mit einem anderen Durchgangsknoten bewertet werden, in der zweiten Teilstufe durch Austausch der Homing von zwei Zugangsknoten alle Möglichkeiten einer Verbesserung der gegenwärtigen Lösung mittels der Nachbarschaftsgenerators (3050), des Dimensionierungsblocks (3051), des Auswertungsblocks (3052) und des Entscheiderblocks (3060) ausgewertet werden;
- nach einem Ausschöpfen der Möglichkeiten der Homing-Austausch-Nachbarschaft wird die endgültige Lösung erhalten, die das Ergebnis des Verfahrens ist.

**18.** Softwareprodukt, das direkt in dem internen Speicher eines Computers speicherbar ist, mit Softwarecodeteilen zur Realisierung der Verfahrensschritte gemäß einem der Ansprüche 1 bis 17, wenn das Softwareprodukt auf einem Computer läuft.

## Revendications

**1.** Procédé (10) de planification d'un réseau de télécommunication fixe comprenant un réseau d'accès et un réseau de transit, en déterminant le coût minimum d'installation des appareils dudit réseau de télécommunication fixe, lesdits appareils comprenant des noeuds de réseau d'accès (C, D,..., I), permettant de réaliser différents types de commutation, en particulier des commutations de circuit, des commutations par paquets ou des interconnexions de circuit, et sont connectés selon un guidage simple, guidage double de paires libres ou guidage double de paires fixes vers des noeuds du réseau de transit (A1, A2, B1, B2) disposant d'une série d'entrées (900) et permettant de fournir une série de résultats (9000) comprenant les étapes suivantes :

- insertion de ladite série d'entrées (900) ;
- une première étape de détermination d'une configuration de réseau initiale (1000), dans laquelle une structure de réseau conforme aux exigences de ladite série d'entrées est déterminée, comprenant des liaisons d'accès de dimensionnement, la sélection de noeuds de transit, la détermination de guidage des noeuds d'accès et des noeuds de transit et le dimensionnement des liaisons de transit, **caractérisé en ce qu'**il comprend en outre les étapes suivantes :

  - une deuxième étape d'optimisation (2000), dans laquelle la configuration de réseau initiale est soumise aux changements dans le choix des noeuds de transit et de guidage des noeuds d'accès vers les noeuds de transit, structurée en deux étapes successives, chacune réalisant la sélection des paires fixes, la sélection de guidage des noeuds d'accès vers les noeuds de transit et le dimensionnement des liaisons de transit, la première par l'intermédiaire d'une recherche locale impliquant l'ajout ou l'élimination d'un noeud de transit, la seconde par l'intermédiaire d'une recherche locale plus étendue, impliquant des ajouts, éliminations et remplacement des noeuds de transit, visant à réduire le coût de la configuration de réseau obtenu en tant que somme des coûts des noeuds de transit, du coût des liaisons d'accès et du coût des liaisons de transit ;
  - une troisième étape de post-optimisation (3000), dans laquelle la combinaison en paires fixes des noeuds de transit et le guidage des noeuds d'accès vers les noeuds de transit est modifiée, structurée en trois étapes, après quoi la première est exécutée uniquement en présence de guidage double de paire fixe et fournit, par l'intermédiaire d'une recherche locale effectuée en échangeant les noeuds de transit des paires fixes, pour déterminer le choix du guidage des noeuds d'accès vers les noeuds de transit et le dimensionnement des liaisons de transit, la deuxième et troisième fournissent, en gardant inchangé le nombre de noeuds de transit et la combinaison en paires fixes, à la fois le changement du guidage des noeuds d'accès et des noeuds de transit par le biais de deux modes opératoires différents, et le dimensionnement des liaisons de transit, dans le but de réduire encore le coût de la configuration de réseau obtenu en tant que somme des coûts des noeuds de transit, du coût des liaisons d'accès et du coût des liaisons de transit ;
  - la fourniture de ladite série (9000) de résultats représentative du coût minimum d'installation pour les appareils de réseau fixe, comprenant le dimensionnement des liaisons d'accès (90), nécessaires pour connecter les noeuds d'accès aux noeuds de transit, de façon distincte et séparée pour chaque type de trafic, la liste (100) des noeuds de transit sélectionnée parmi la série de noeuds candidats, leur organisation éventuelle en paires fixes et la configuration de noeud en résultant, emplacement par emplacement, les associations (110) entre les noeuds d'accès et les noeuds de transit, et le dimensionnement des liaisons (120) sur le réseau de transit pour chaque type de trafic.

**2.** Procédé selon la revendication 1, **caractérisé en ce que** ladite série d'entrées (900) est constituée par un ou plusieurs articles d'information :

- la liste des noeuds d'accès et l'emplacement de l'installation (20) ;
- le type (30) de guidage des noeuds d'accès vers le réseau de transit : simple, double libre, double avec paires

fixes ;
- la matrice de trafic entre les noeuds d'accès (40), assignée séparément pour trafic de circuit, par paquets et d'interconnexion ;
- la longueur moyenne de paquets (80) ;
- la liste (50) des emplacements candidats pour loger l'installation des noeuds de transit ;
- les paramètres de capacité et les coûts des noeuds de transit (60) pour chaque emplacement candidat ;
- les paramètres et coûts des liaisons (70) entre les noeuds d'accès et les noeuds de transit et entre les noeuds de transit.

**3.** Procédé selon la revendication 1, **caractérisé en ce que** ladite série de résultats (9000) comprend en outre le coût économique pour construire le réseau (130), qui comprend les coûts des noeuds de transit installés dans leur configuration et de l'accès nécessaire et des liaisons d'accès.

**4.** Procédé selon la revendication 1, **caractérisé en ce que** la première étape de calcul de la configuration initiale (1000) comprend une ou plusieurs des étapes suivantes :

- dimensionnement (1005) des liaisons d'accès vers les noeuds de transit, en tant que fonction de la matrice de trafic, du type de guidage du noeud d'accès, de la liaison et de la qualité des paramètres de service, dans les cas de trafic à commutation de circuit et de commutation par paquets, où dans le cas de guidage simple tout le trafic est attribué au seul segment qui relie le noeud d'accès retournant vers son noeud de transit, tandis qu'en présence du guidage double le trafic proposé à chacun des deux segments qui ramène le noeud d'accès au réseau de transit est divisé en deux ;
- tri (1010) les noeuds candidats sur la base d'une fonctionnelle obtenue pour chaque noeud candidat résiduel en ajoutant les valeurs du coût minimum de la liaison de base du candidat vers tous les noeuds d'accès ;
- ajout (1020) à la série des noeuds de transit le noeud candidat avec la valeur la plus basse de la fonctionnelle et soustraction du même noeud de la série des noeuds candidats résiduels ;
- si la série des noeuds de transit offre une capacité de traitement de trafic suffisante pour servir tous les noeuds d'accès (1030), pour chaque type de trafic, acquisition de la série des noeuds de référence et exécution de l'étape suivante (1040), sinon retour à ladite étape de tri (1010) ;
- sélection des paires fixes (1040), s'il y a au moins un noeud d'accès nécessitant ce type de guidage ;
- sélection du guidage (1045) par le biais de l'algorithme de Martello et de Toth ;
- dimensionnement du réseau de transit et détermination des exigences des modules de transit et d'accès sur les noeuds de transit (1050), détermination du nombre de modules d'accès nécessaires pour loger toutes les liaisons d'accès connectées et du nombre de liaisons de transit connectées au noeud, déterminées par dimensionnement du réseau de transit ;
- vérifier (1060) si le guidage de l'étape précédente génère pour chaque noeud de transit un nombre de modules de transit et d'accès qui est compatible avec les contraintes de capacité assignées aux noeuds candidats, passage à l'étape suivante (1070) si le résultat de la vérification est positif, sinon retour à ladite étape de tri (1010) pour augmenter le nombre de noeuds de transit ;
- détermination de la valeur économique de la solution (1070) en calculant le coût du réseau obtenu en tant que somme des noeuds de transit, du coût des liaisons d'accès et du coût des liaisons de transit.

**5.** Procédé selon la revendication 4, **caractérisé en ce que** ledit dimensionnement des liaisons d'accès (1005) est conduit comme suit :

- pour le trafic commuté, le calcul du nombre minimum de voies, nécessaire pour satisfaire le degré souhaité de perte sur la $i^{ème}$ liaison d'accès, est réalisé par la somme de tout le trafic d'origine destiné au même noeud d'accès et en appliquant la formule d'Erlang inversée ;
- pour le trafic commuté par paquets, les formules utilisées sont celles qui dans la théorie de file d'attente décrivent le comportement des systèmes MG1, pour s'assurer que le flux de paquet n'est pas soumis à un délai moyen dépassant un délai moyen maximum spécifié en tant que qualité de service ;
- pour le trafic interconnecté, le nombre entier supérieur de la division entre le total de la bande sortant du noeud ou entrant dans le noeud et la capacité de la liaison d'accès de base réduite à la valeur d'utilisation maximum, en prenant la valeur la plus élevée entre celles évaluées pour le trafic sortant du noeud et le trafic entrant dans le noeud.

**6.** Procédé selon la revendication 2, **caractérisé en ce que** pour le dimensionnement des liaisons d'accès et des liaisons de transit qui transportent le trafic à commutation de circuit, parmi les paramètres d'entrée (70) on trouve

le nombre des canaux ou circuits utilisables sur la liaison de base, le degré de perte d'un appel sur la liaison et l'utilisation maximum de la liaison pour le trafic de circuit, assignés séparément pour les liaisons de transit et d'accès.

**7.** Procédé selon la revendication 2, **caractérisé en ce que** pour le dimensionnement des liaisons d'accès et des liaisons de transit qui transportent le trafic à commutation par paquets, parmi les paramètres d'entrée (70) on trouve la longueur moyenne des paquets, la variance de longueur des paquets, le retard maximal moyen des paquets autorisé et l'utilisation maximum de la liaison pour le trafic de paquets, assignés séparément pour les liaisons de transit et d'accès.

**8.** Procédé selon la revendication 2, **caractérisé en ce que** pour dimensionner les liaisons d'accès et les liaisons de transit qui transportent le trafic interconnecté, parmi les paramètres d'entrée (70) on trouve la capacité de la liaison de base et l'utilisation maximum de la liaison, assignées séparément pour les liaisons de transit et d'accès.

**9.** Procédé selon la revendication 2, **caractérisé en ce que** la capacité de la liaison de base est supposée égale à une première valeur pour tous les types de trafic sur les liaisons entre l'accès et le transit et, similairement, égale à une seconde valeur pour toutes les liaisons du réseau de transit.

**10.** Procédé selon la revendication 2, **caractérisé en ce que** lorsqu'une seule liaison physique n'est pas suffisante entre un noeud d'accès et le noeud de transit associé, ou sur les deux segments topologiques entre le noeud d'accès et ses deux noeuds de transit dans le cas de guidage double, ou sur les segments du réseau de transit, les unités de capacité de base multiples sont assignées à la liaison.

**11.** Procédé selon la revendication 1, **caractérisé en ce que** le trafic des trois types mentionnés précédemment sur le réseau d'accès et le réseau de transit est envoyé séparément sur les liaisons physiques dédiées à chacun des trois types.

**12.** Procédé selon la revendication 3, **caractérisé en ce que** le coût des liaisons est fourni par le biais de deux matrices : la matrice de coût des liaisons entre les noeuds d'accès et les noeuds candidats et la matrice des coûts des liaisons entre les noeuds candidats eux-mêmes, dont les valeurs se réfèrent respectivement aux coûts annuels, ou le coût pour une période différente, de la liaison d'accès de capacité de base individuelle et la liaison de transit.

**13.** Procédé selon la revendication 1, **caractérisé en ce que** la seconde étape d'optimisation (2000) comprend une ou plusieurs des étapes suivantes :

- en commençant par la solution initiale (1100), le voisinage est exploré par le biais d'un cycle qui permet la mise en oeuvre de générateur de voisinage de 1ère étape (2010) en ajoutant/enlevant un noeud de transit à un temps ;
- les paires fixes sont sélectionnées (2020) ;
- le guidage est sélectionné (2030) ;
- les noeuds de transit et de liaisons sont dimensionnés (2031) ;
- la valeur de la solution est trouvée (2035) ;
- l'amélioration de la fonction coût est vérifiée (2040) et, éventuellement, la meilleure solution courante est mise à jour avec une solution de coût la plus économique, en réitérant la 1ère étape (2010) ;
- lorsque la 1ère étape de recherche locale a épuisé ses possibilités, une 2ème étape (2050) est lancée avec la recherche sur un voisinage plus étendu, en prenant en considération non seulement l'ajout et le retrait des noeuds de transit mais également les remplacements, en essayant d'abord les remplacements et, ensuite, de nouveau les ajouts/retraits du générateur de voisinage de la 2ème étape (2050) ;
- la sélection des paires fixes est réalisée de nouveau (2020) ;
- le décideur (2070) est utilisé pour opter pour la version rapide (2060) ou la version étendue (2030) de l'algorithme de sélection de guidage, selon qu'un remplacement ou un ajout/retrait a été réalisé sur la série des noeuds de transit ;
- les noeuds de transit et de liaison sont dimensionnés (2031) ;
- la valeur de la solution courante est trouvée (2035) ;
- un bloc décideur (2080) est utilisé pour vérifier l'amélioration de la fonction coût et, le cas échéant, la meilleure solution courante est mise à jour avec la solution de coût la plus économique, en réitérant la 2ème étape (2050) ;
- lorsque l'on commence par la meilleure solution courante, tout le voisinage fourni par le générateur de la 2ème étape est exploré sans améliorations, l'étape se termine en sortant le bloc décideur (2080) et la solution intermédiaire est stockée (2100).

**14.** Procédé selon la revendication 13, **caractérisé en ce que** les paires fixes sont sélectionnées (2020), en minimisant la somme des coûts de base entre les éléments de la même paire, de la façon suivante :

1) pour chaque noeud de transit (N(i)) n'appartenant pas à une paire fixe, le noeud de transit le plus proche (N1(i)) est déterminé également en tant que deuxième noeud de transit le plus proche (N2(i)), tous deux n'appartenant pas aux paires fixes précédemment définies.
2) au sein des noeuds de transit mentionnés précédemment (N(i)), n'appartenant pas à une paire fixe, le noeud de transit (N(K)) est sélectionné de sorte que la différence (Δ) entre le coût de la liaison de transit de base entre le troisième noeud de transit (N(K)) et le premier (N1(K)), et le coût entre le troisième (N(K)) et le deuxième (N2 (K)) est la plus importante ;
3) une nouvelle paire fixe est formée avec le troisième noeud (N(K)) et le premier (N1(K)) ;
4) si le nombre de noeuds de transit n'appartenant pas aux paires fixes est égal à 2, la dernière paire fixe est formée avec les noeuds restants et la procédure se termine, sinon l'étape initiale 1) est redémarrée pour former une nouvelle paire.

**15.** Procédé selon la revendication 13, **caractérisé en ce que**, pour la sélection de guidage (2030), les étapes suivantes sont complétées pour chaque type de trafic :

- pour chaque noeud d'accès (A(i), les noeuds de transit sont triés par valeurs décroissantes d'un paramètre de désirabilité (F(i,j)), une fonction du coût de la liaison de base et du trafic échangé par le noeud ;
- le noeud d'accès (A(i)) avec la plus grosse perte en termes de réduction de coût est déterminé, si le deuxième meilleur candidat est sélectionné à la place du premier en tant que noeud de guidage ;
- le noeud (A(i)) est connecté au meilleur candidat ;
- l'étape est réitérée, en connectant le noeud d'accès suivant.

**16.** Procédé selon la revendication 13, **caractérisé en ce que** le guidage de paire double ou simple est sélectionné (2030) uniquement dans le cas de solutions obtenues en échangeant le noeud de transit (N(i)) avec le noeud candidat (N(j)), en utilisant un procédé de guidage rapide comprenant les étapes suivantes :

- les noeuds d'accès dont la distance à partir du noeud (N(j)) est inférieure à celle du noeud de transit de référence courant sont connectés au noeud (N(j)) qui vient juste d'être inséré dans la série de noeuds de transit ;
- l'ordre de connexion de la solution de démarrage, produit par l'algorithme de Martello et Toth, est suivi, en maintenant les connexions précédentes jusqu'à la rencontre d'un noeud connecté au noeud de transit (N(i)), qui ne fait plus partie de la série de noeuds de transit mais plutôt de la série de noeuds candidats ;
- l'algorithme de Martello et Toth est appliqué à tous les noeuds restants n'ayant pas de guidage.

**17.** Procédé selon la revendication 1, **caractérisé en ce que** ladite troisième étape de post-optimisation (3000) comprend une ou plusieurs des étapes suivantes :

- en commençant par ladite solution intermédiaire (2100), le voisinage amélioré pour l'échange des paires fixes par le biais du générateur est exploré (3010), en présence de noeuds nécessitant un guidage de paires fixes double;
- le guidage est réalisé (3011) ;
- les noeuds de liaison et de transit sont dimensionnés (3012) ;
- la valeur du réseau est trouvée (3013) ;
- en utilisant un décideur (3020), la vérification est effectuée pour savoir si une solution de coût plus économique que la solution courante a été réalisée : dans l'affirmative, la solution de coût minimum courante est mise à jour, en redémarrant avec un nouveau voisinage, sinon s'il est possible de continuer à trouver un nouvel élément de voisinage, l'étape est réitérée (3010) ;
- après épuisement des possibilités de voisinage de paires fixes, l'étape passe au voisinage de guidage, organisé en deux sous étapes séquentielles, dans la première desquelles, en utilisant le générateur de voisinage (3030), le bloc de dimensionnement (3031), le bloc d'évaluation (3032) et le bloc décideur (3040) toutes les possibilités d'amélioration de la solution courante en connectant un noeud d'accès à un noeud de transit différent sont évaluées, dans la seconde sous-étape toutes les possibilités d'amélioration de la solution courante, par échange du guidage des deux noeuds d'accès, sont évaluées par le biais du générateur de voisinage (3050), le bloc de dimensionnement (3051), le bloc d'évaluation (3052) et le bloc décideur (3060) ;
- après épuisement des possibilités du voisinage d'échange de guidage, la solution finale est obtenue (9000), et résulte du procédé.

18. Produit logiciel directement stockable dans la mémoire interne d'un ordinateur comprenant des parties de code logiciel pour mettre en oeuvre les étapes du procédé selon l'une quelconque des revendications 1 à 17, lorsque le produit logiciel tourne sur un ordinateur.

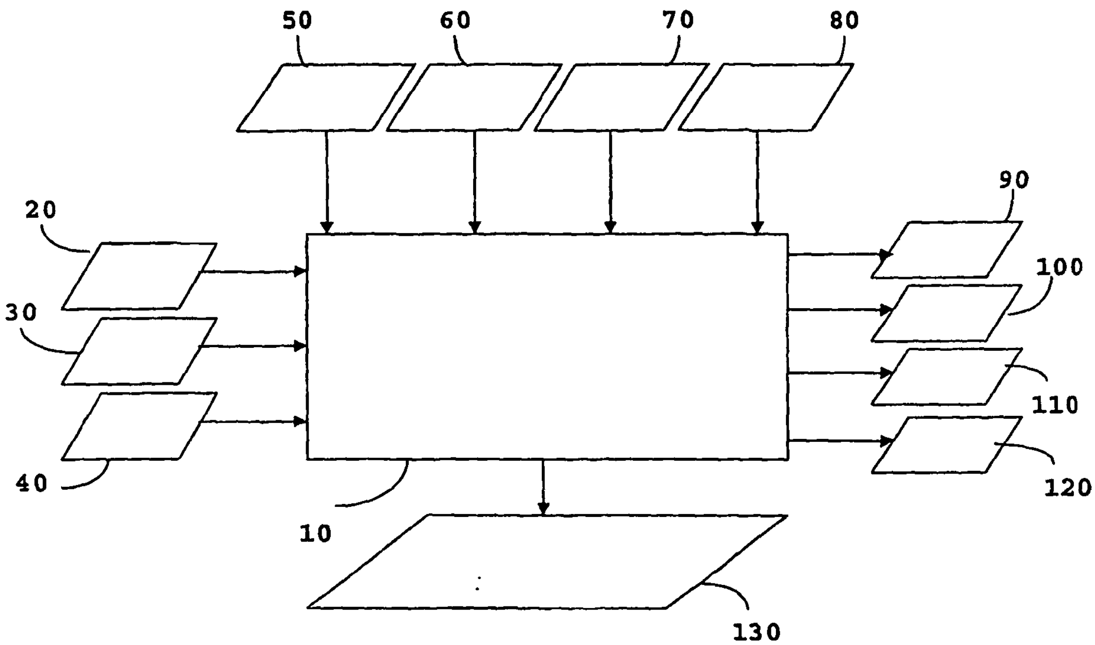


Fig. 1

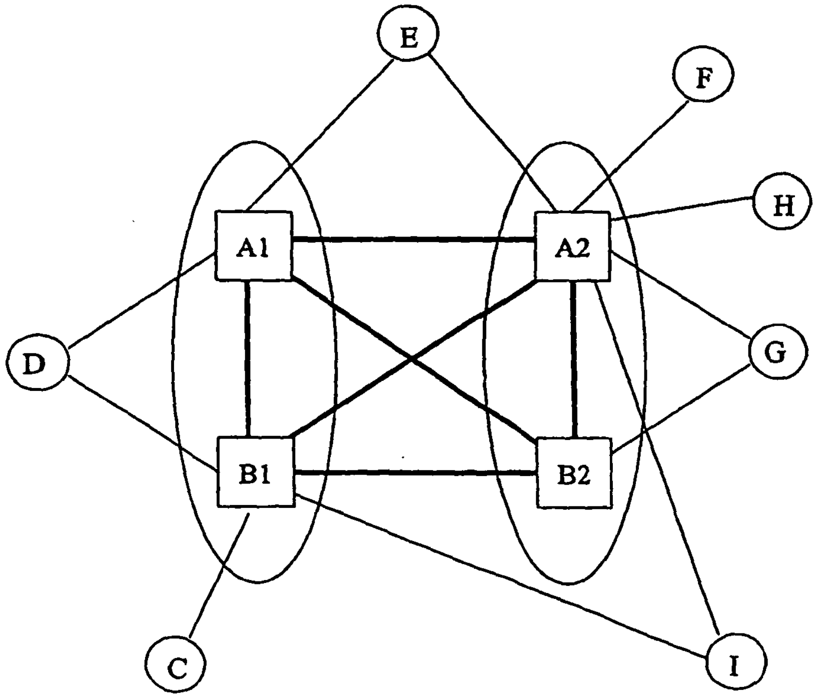


Fig. 2

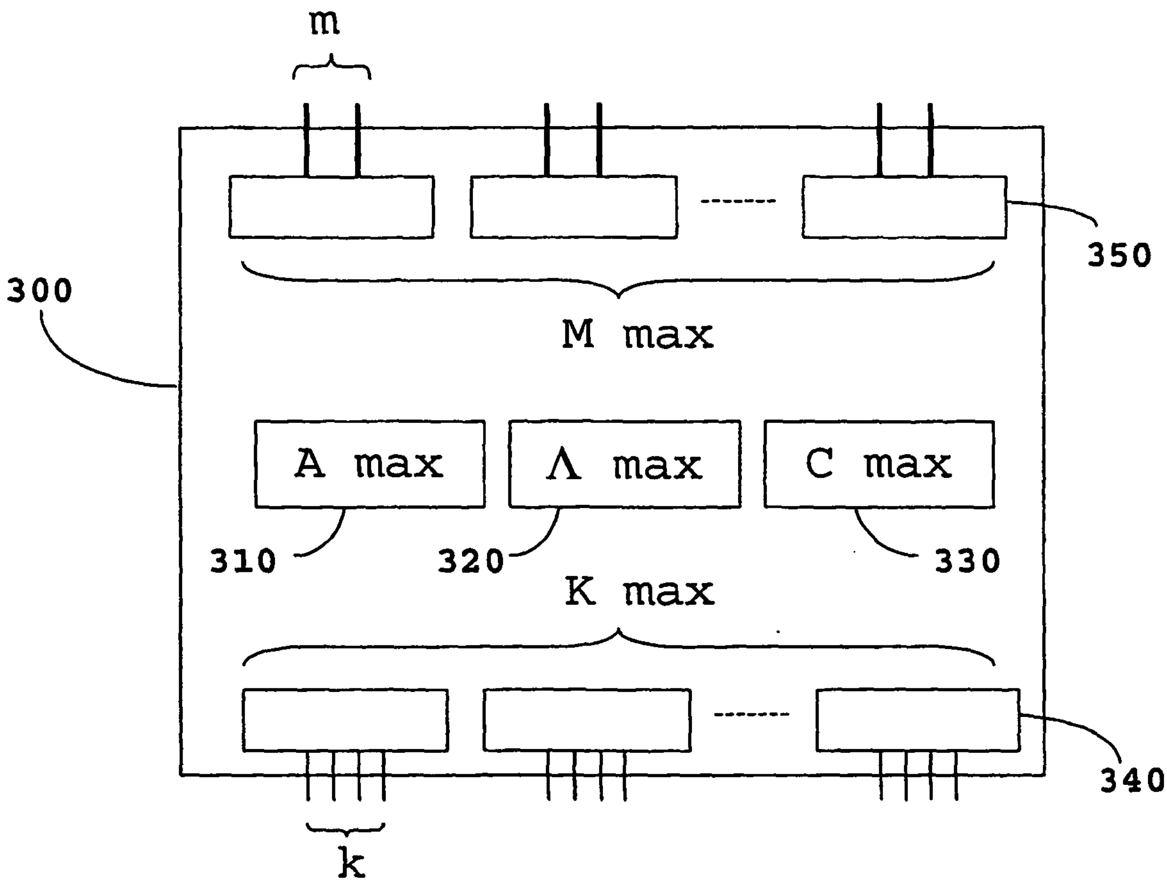


Fig. 3

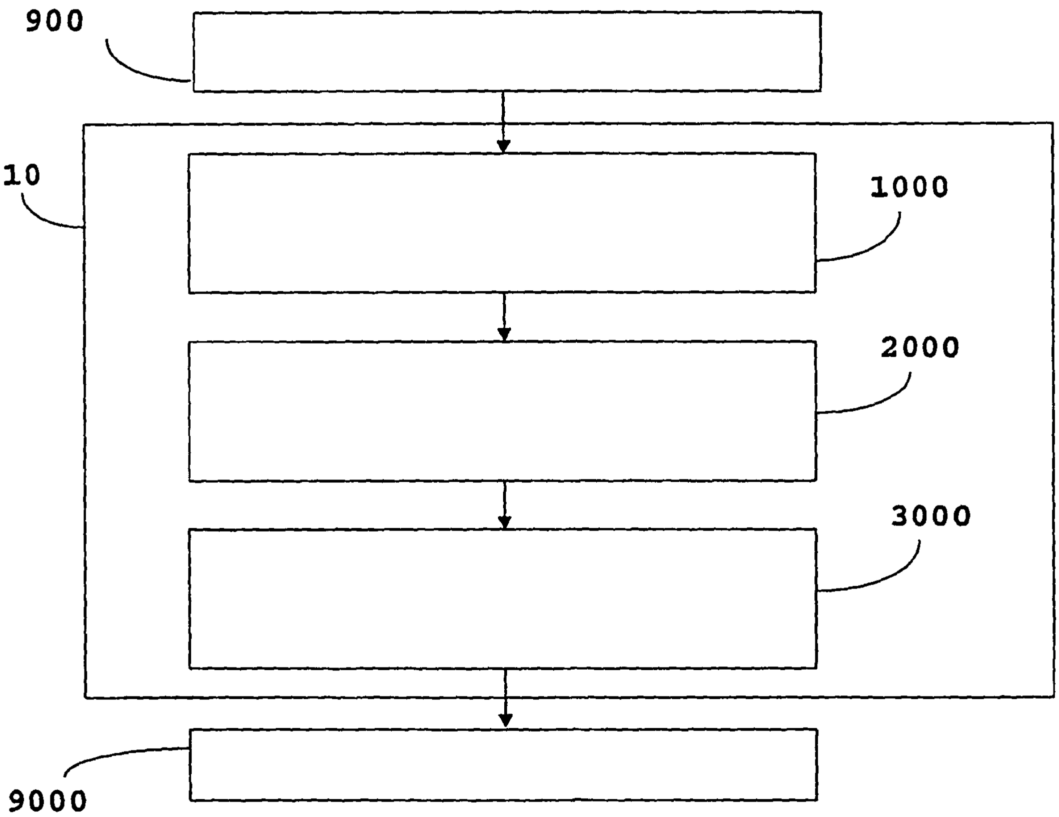


Fig. 4

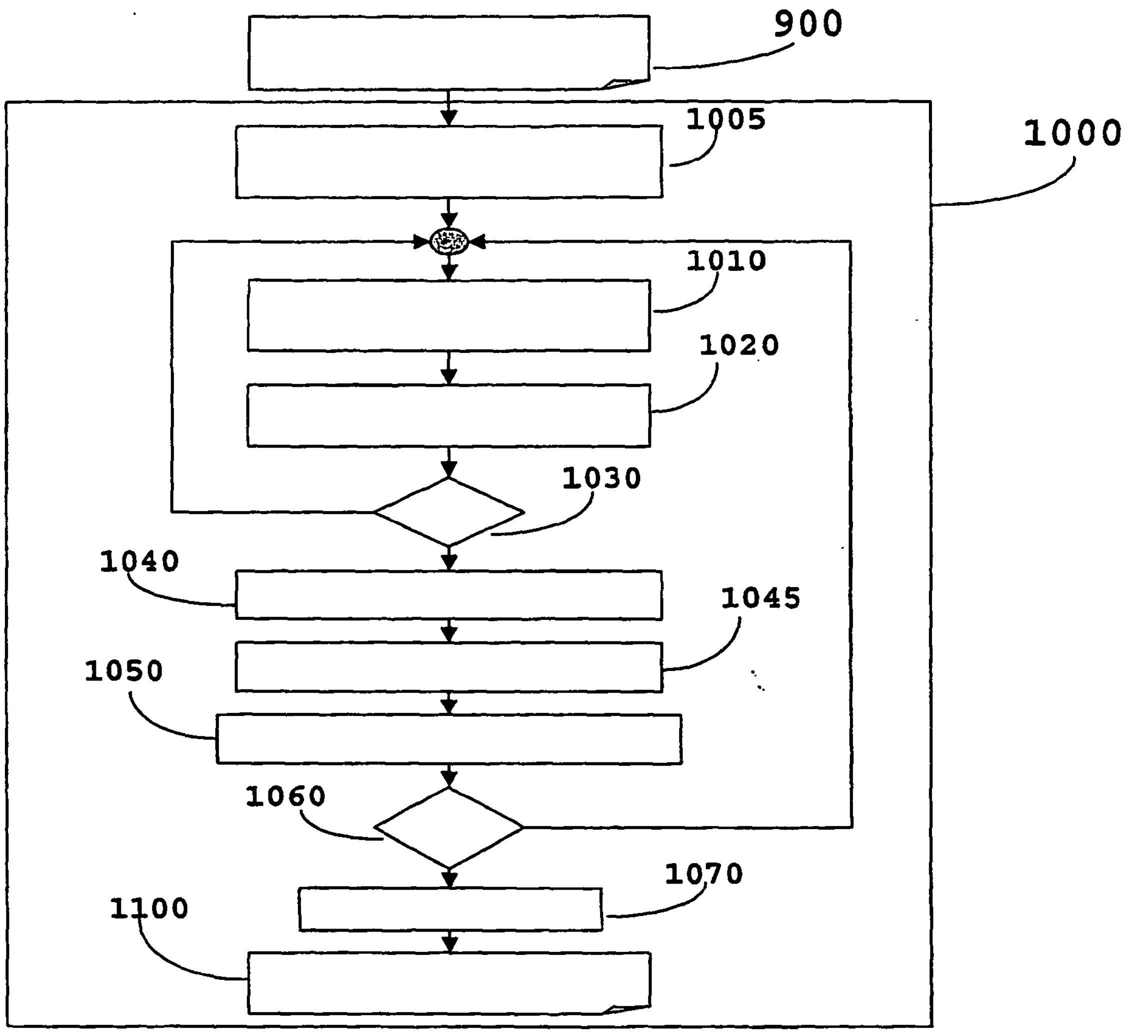


Fig. 5

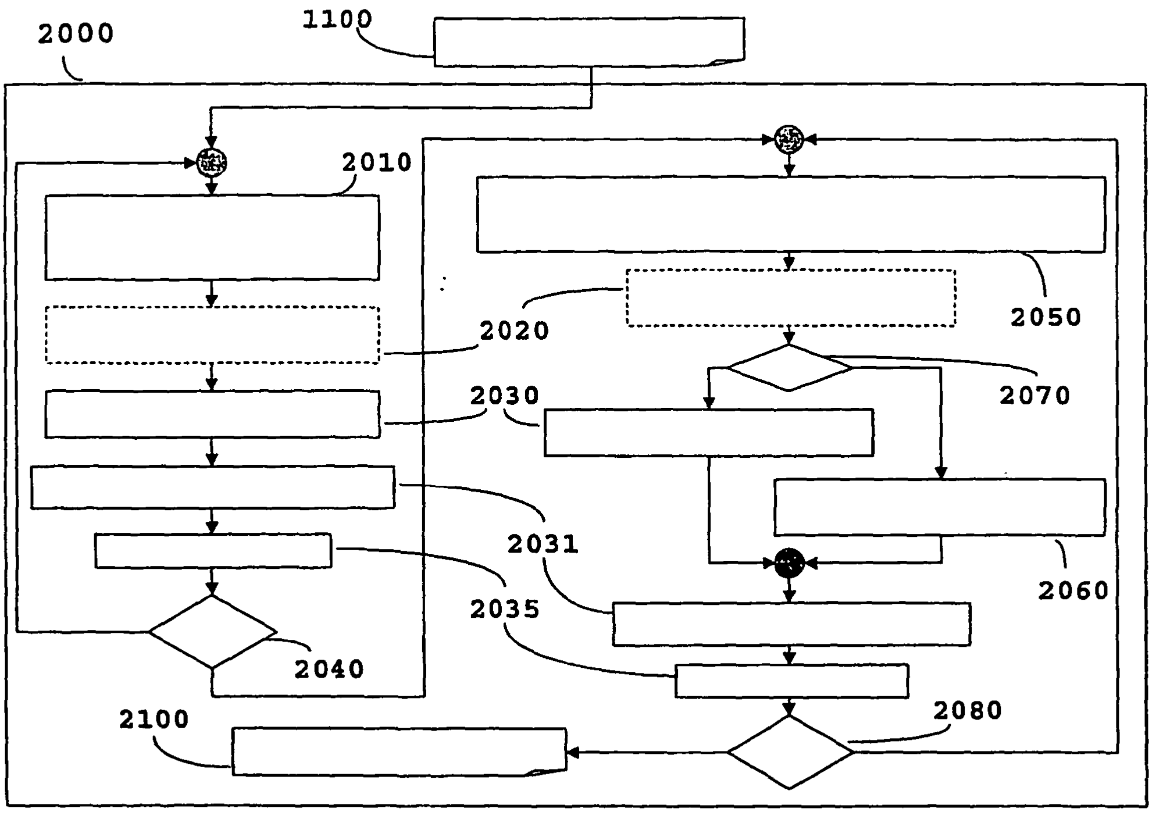
2000
1100
2010
2020
2030
2031
2035
2040
2050
2060
2070
2080
2100

Fig. 6

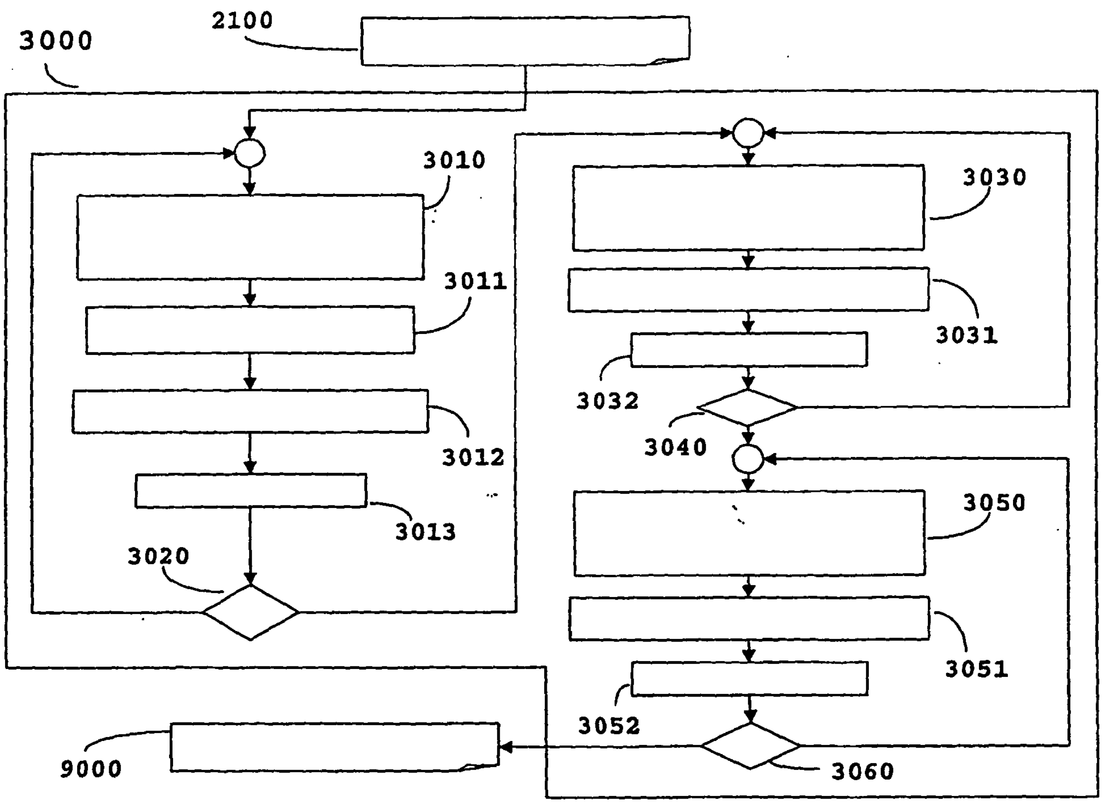
2100
3000
3010
3011
3012
3013
3020
3030
3031
3032
3040
3050
3051
3052
3060
9000

Fig. 7

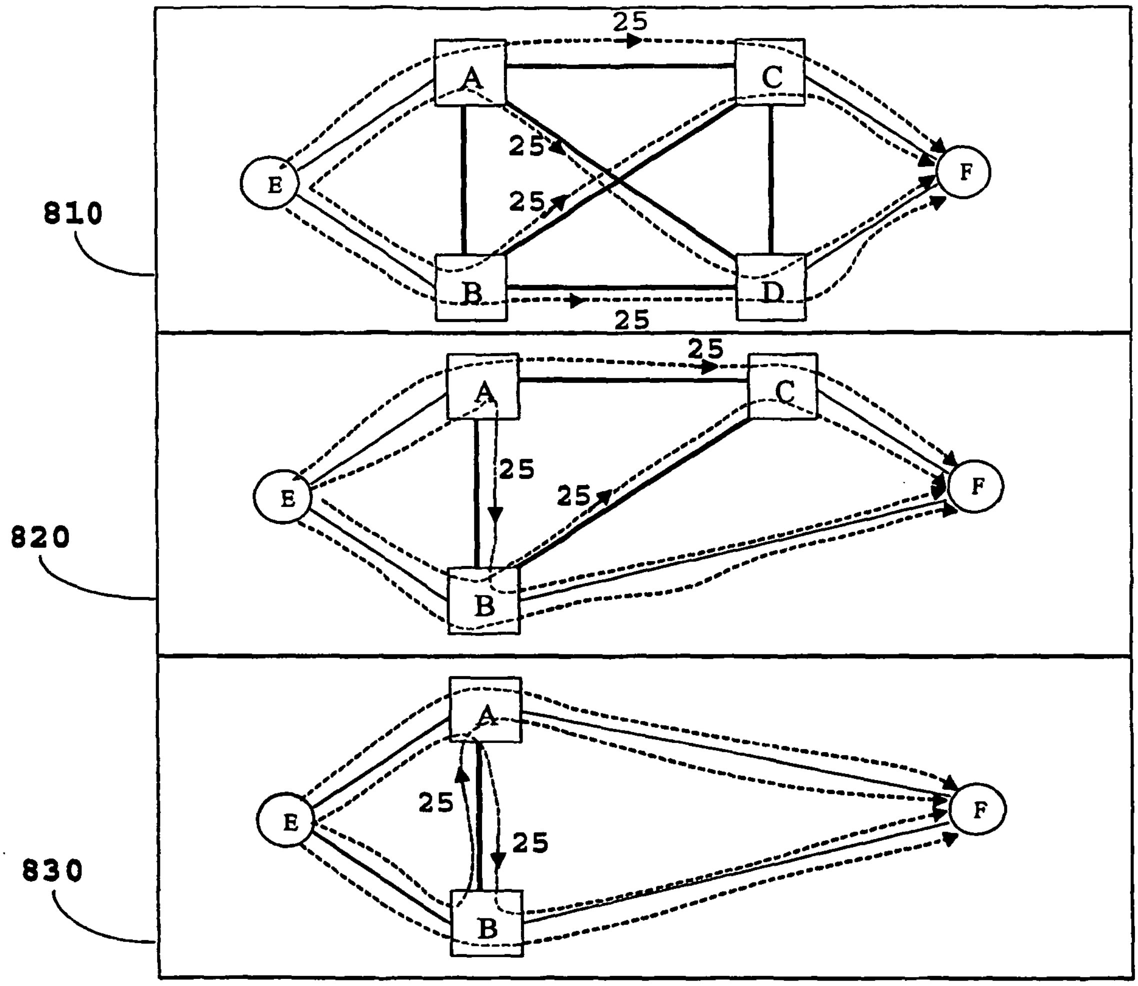


Fig. 8

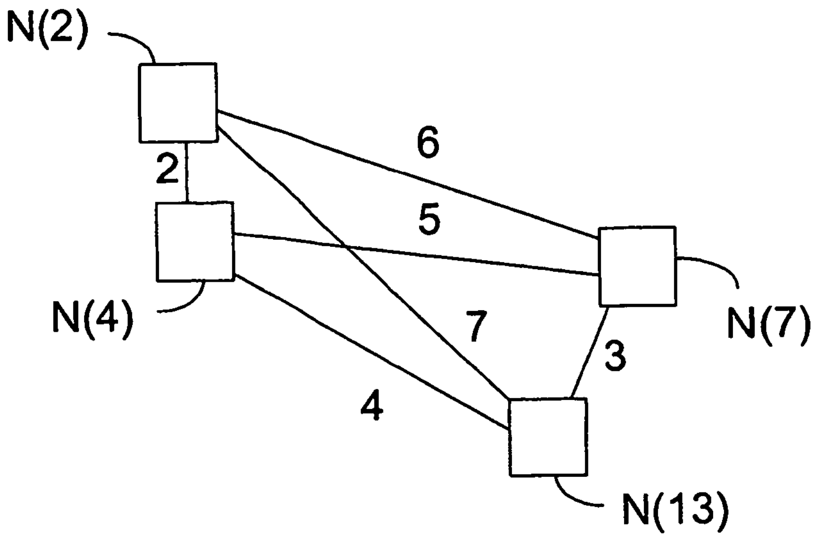


Fig. 9.

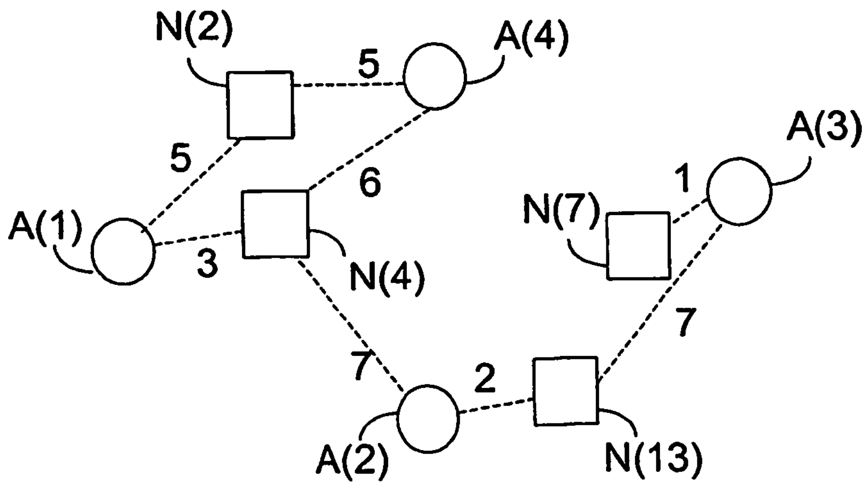


Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Hub location in Backbone/Tributary network design. **KLINCEWICZ J. G.** Location Science. Pergamon Press, 1998, vol. 6
- Ingegneria del traffico nelle reti di telecomunicazioni. **M. BUTTÒ ; G. COLOMBO ; A. TONIETTI ; T. TOFONI.** Traffic Engineering in Network Telecommunications. 1991
- **MARTELLO S ; TOTH P.** Knapsack problems-Algorithms and Computer Implementations. Wiley and Sons, 1990